# EUROPEAN PATENT APPLICATION

(11) **EP 1 529 759 A1**
(43) Date of publication of application: **11.05.2005**
(21) Application number: 03788064.8
(22) Date of filing: 08.08.2003
(51) Int. Cl.: C03B 32/00, C03B 23/045, G02B 6/00

(54) **METHOD OF PRODUCING HIGHER-PURITY GLASS ELEMENT, HIGH-PURITY GLASS ELEMENT, AND PRODUCTION METHOD AND DEVICE FOR GLASS TUBE**

(30) Priority: 12.08.2002 JP 2002234563; 12.08.2002 JP 2002235274; 11.06.2003 JP 2003166430
(71) Applicant: SUMITOMO ELECTRIC INDUSTRIES, Ltd, Osaka-shi, Osaka 541-0041 (JP)
(72) Inventor: KATO, Shuichiro, Sumitomo Electrics Industries Ltd, Yokohama-shi, Kanagawa 244-0844 (JP); MORIYA, Tomomi, Sumitomo Electrics Industries Ltd, Yokohama-shi, Kanagawa 244-0844 (JP); OGA, Yuichi, Sumitomo Electrics Industries Ltd, Yokohama-shi, Kanagawa 244-0844 (JP)
(74) Representative: Grünecker, Kinkeldey, Stockmair & Schwanhäusser Anwaltssozietät
(86) International application number: PCT/JP2003/010149
(87) International publication number: WO 2004/016556

(57) **Abstract**

An object of the present invention is to provide a method of highly purifying a glass body, which enables high purification of the glass body while decreasing deformation of the glass body at a high degree, to provide a highly purified glass body, and to provide a method and an apparatus for manufacturing a glass tube, which can obtain a highly purified glass tube.

A method of highly purifying a glass body according to the present invention is to apply a voltage between electrodes 1 and 2, which make contact with the glass pipe 11, in a nearly radial direction of the glass pipe 11 while heating the glass pipe 11 to a temperature within a range less than 1300°C. Further, a method of manufacturing a glass tube according to the invention is to generate a voltage gradient in a radial direction of a glass tube 106 by applying voltages to the inner circumferential side and the outer circumferential side of the glass tube 106 when a glass rod 103 is gradually formed into the glass tube 106 by heating the glass rod 103 to soften the glass rod 103 and by bringing a boring jig 130 into contact with a softened portion of the glass rod 103.

## Description

### Technical Field

The present invention relates to a method of highly purifying a glass body, a highly purified glass body obtained by this method, and a manufacturing method and apparatus for manufacturing a glass tube by performing high-degree purification on the glass tube.

### Background Art

In recent years, with advancement in optical communication technology, the use of optical fibers has grown. The main methods of manufacturing optical fibers are VAD method (Vapor phase Axial Deposition method), OVD method (Outside Vapor phase Deposition method), and MCVD method (Modified Chemical Vapor phase Deposition method). Especially, an increase in the bit rate and in the wavelength multiplicity thereof has resulted in a growing densification of information transmission capacity thereof, and thus reduction in the polarization dispersion of optical fibers is strongly desired.

In the manufacture of optical fibers, usually, a method of obtaining desired optical fibers by performing high-speed drawing on formable objects referred to as preforms is employed. The shape of the optical fiber takes the shape and quality of the preform. Thus, when a preform is formed, extremely high precision control of the shape and quality of the preform is required.

For example, the MCVD method is to deposit glass particles (soot) on the inner wall of a pipe for inner deposition, which is constituted by a glass tube. This glass tube becomes a part of the preform without change. Thus, this glass is required to have small noncircularity and eccentricity ratio, uniform thickness and excellent properties. An optical fiber manufactured from a glass tube, whose noncircularity or uneven-thickness is large, has a large value of Polarization Mode Dispersion (PMD).

Hitherto, there has been proposed a hot carbon drill press-in process for forming a silica glass pipe by pressing a boring member, such as a carbon drill, against a glass ingot which is heated while rotating the boring member (JP-A-7-109135).

Also, there has been proposed a method of heating and softening an end of a columnar silica glass rod while rotating the rod, and of engaging a tip end of a boring member with a central part of an end surface of the rod, and rotating the glass rod surrounding the tip end of the boring member with respect to the boring member while drawing the rod circumferential edge part (Japanese Patent No. 2,798,465).

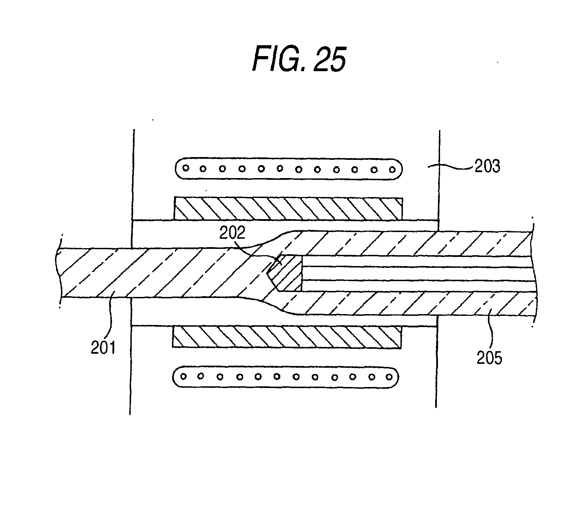

These methods are referred to as piercing methods. The piercing method is to form a glass body 201 into a glass tube 205 gradually from a front-side part of the glass body by making a boring jig 202 abut against the glass body 201 and pressing the boring jig 202 against the glass body 201 while heating the periphery of the abutted part of the boring jig 202 by a furnace 203, as illustrated in, for example, FIG. 25. At least a part of the boring jig 202, which makes contact with the glass body 201, is formed of a material, for example, carbon, which is available at the softening temperature of glass and difficult to react with glass.

However, it is frequent that impurities are included into the glass tube, which is obtained in this manner, in the step of manufacturing a glass ingot or in the step of boring by a boring member. In recent years, with increasing demand for improvement in the performance of optical fibers, glass tubes having higher purities in comparison with conventional glass tubes have been needed.

In Japanese Patent No. 2,726,729, it is described that a technique of diffusing metallic impurity ions from an outer wall surface of a fused silica glass tube by applying a voltage to the tube while the tube is heated at a temperature of 1000°C or higher (in the examples, temperatures of 1500°C, 1600°C, and 2100°C), and thus, high-degree purification of the fused silica glass tube can be achieved.

However, the fused silica glass tube obtained in this way shows large deformation due to the application of heat to the tube. In the case of applying this technique to a glass pipe requiring a high degree of accuracy of shape, generally, it is necessary to add a postforming process, in which the tube is reprocessed into a desired shape, subsequent to the high-degree purification of the glass pipe. Usually, in the postforming process, in order to set the inside diameter and the outside diameter of the tube to be constant in the longitudinal direction of the tube, it is necessary to measure the inner diameter and outer diameter over the whole length of the tube and to perform forming on the inner circumferential surface and the outer circumferential surface of the tube according to the measured diameters. This may become a factor in extremely increasing the manufacturing cost of the tube. Moreover, under some deformed condition of the tube, it is very difficult to manufacture the tube of a desired shape.

Further, a glass rod, in which a glass-pipe hole is not formed yet, is required to have a high degree of accuracy of shape and high purity quality. However, it is very difficult to remove impurities, which are included into a glass rod when manufactured, while simultaneously decreasing deformation due to the fact that the glass rod is heated to high temperature.

### Disclosure of Invention

An object of the invention is to provide a method of highly purifying a glass body, which enables high purification of the glass body while decreasing deformation of the glass body at a high degree, to provide a highly purified glass body, and to provide a method and an apparatus for manufacturing a glass tube, which can obtain a highly purified glass tube.

A method of highly purifying a glass body according to the invention, which can achieve the object, is to apply voltages, in a nearly radial direction of the glass body, to at least a part in a longitudinal direction of a columnar or cylindrical glass body from at least one pair of electrodes placed on an exterior of an outer circumferential surface of the glass body.

Incidentally, specifically, a columnar glass rod and a cylindrical glass pipe or the like, which are finished to predetermined dimensions by an appropriate manufacturing method, are used and cited as the glass body.

Further, preferably, the electrodes are plural anodes and plural cathodes arranged in a circumferential direction of the glass body, and a potential of each of the anodes and a potential of each of the cathodes are respectively set.

Furthermore, preferably, a relative swinging motion between the glass body and each of the electrodes occurs in a circumferential direction of the glass body.

Further, preferably, the method of highly purifying a glass body comprises a surface removing process of removing a portion of the glass body extending from the outer circumferential surface inward to a predetermined depth after the voltages are applied to the glass body.

Moreover, in a method of highly purifying a glass body according to the invention, which can achieve the object, while a cylindrical glass body is rotated around a central axis thereof used as a rotation axis at a rotational speed, which is equal to or more than 1 rpm and equal to or less than 100 rpm, voltages are applied, in a nearly radial direction of the glass body, to at least a part in a longitudinal direction of the glass body from electrodes disposed at an outer circumferential surface side and an inner circumferential surface side of the glass body. Further, preferably, the rotational speed is equal to or more than 1 rpm and equal to or less than 20 rpm.

Furthermore, preferably, a voltage gradient of the voltage is set to be a negative gradient in a direction from the inner circumferential side of the glass body to the outer circumferential side thereof. Moreover, the method of highly purifying a glass body comprises a surface removing process of removing a portion of the glass body extending from an outer circumferential surface inward to a predetermined depth after the voltages are applied to the glass body.

Alternatively, preferably, a voltage gradient of the voltage is set to be a negative gradient in a direction from the outer circumferential side of the glass body to the inner circumferential side thereof. Moreover, the method of highly purifying a glass body comprises a surface removing process of removing a portion of the glass body extending from an inner circumferential surface outward to a predetermined depth after the voltages are applied to the glass body.

Further, preferably, the voltages are simultaneously applied to the entirety in a longitudinal direction of an effective portion of said glass body.

Alternatively, preferably, the voltages are serially applied to the glass body in a longitudinal direction of the glass body.

Furthermore, preferably, when the voltages are serially applied to the glass body in a longitudinal direction of the glass body, portions, to which the voltages have been applied, are sequentially cooled.

Further, in a case where the voltages are applied in a radial direction of the glass body, preferably, the length in the longitudinal direction of the effective portion of the glass body is equal to or more than 500 mm.

Moreover, in a method of highly purifying a glass body according to the invention, which can achieve the object, voltages are applied in a longitudinal direction of a columnar or cylindrical glass body from electrodes placed on exteriors of a first end surface and a second end surface in the longitudinal direction of the glass body.

Furthermore, preferably, the method of highly purifying a glass body, which comprises an end portion removing process of removing a portion of the glass body extending from the second end surface to the first end surface to a predetermined depth, wherein a voltage gradient of the voltage is set to be a negative gradient in a direction from the first end surface to the second end surface of the glass body.

Further, in a case where the voltages are applied in the longitudinal direction of the glass body, preferably, the length in the longitudinal direction of an effective portion of the glass body is less than 500 mm.

Moreover, the voltages may be applied without bringing the electrodes in contact with the glass body.

Furthermore, at least a part of the electrodes may be brought into contact with the glass body.

Further, preferably, the voltages are applied while heating a portion of the columnar glass body, to which the voltages are applied, to a temperature that is less than 1450 °C.

Alternatively, preferably, the voltages are applied while heating a portion of the glass body, to which the voltages are applied, to a temperature that is less than 1300 °C.

Further, preferably, the voltages are applied while heating a portion of the glass body, to which the voltages are applied, to a temperature that is equal to or higher than 450 °C.

Alternatively, preferably, the voltages are applied while heating a portion of the glass body, to which the voltages are applied, to a temperature that is equal to or higher than 600 °C.

Alternatively, preferably, the voltages are applied while heating a portion of the glass body, to which the voltages are applied, to a temperature that is equal to or higher than 900 °C.

Furthermore, preferably, the content concentration of impurity cations contained in an effective portion of the glass body obtained by this invention is equal to or less than 0.01 ppm by weight.

Further, in a high purity glass body according to the invention, which can achieve the object, and which is highly purified according to the method of highly purifying a glass body by applying voltages in a nearly radial direction of the glass body, the outside diameter of the glass body is equal to or more than 100 mm, and that the length of an effective portion is equal to or more than 500 mm.

In the case of the highly purified glass body to which the voltages are applied in the nearly radial direction of the glass body, when the length in the longitudinal direction of the effective portion of the glass body is long, the high purification of the glass body is not inhibited by the length. Therefore, the high purification is favorably performed on the glass body.

Furthermore, in a high purity glass body according to the invention, which can achieve the object, and which is highly purified according to the method of highly purifying a glass body by applying voltages in a longitudinal direction of the glass body, the outside diameter of the glass body is equal to or more than 100 mm, and wherein the length of an effective portion is equal to or less than 500 mm.

In the case of the highly purified glass body to which the voltages are applied in the longitudinal direction of the glass body, when the length in the longitudinal direction of the effective portion of the glass body is short, the high purification is favorably performed on the glass body due to the short length thereof.

Further, preferably, the content concentration of impurity cations contained in an effective portion of the highly purified glass body is equal to or less than 0.01 ppm by weight.

Furthermore, in a method of manufacturing a glass tube according to the invention, which can achieve the object and which has the steps of heating a columnar or cylindrical glass body to thereby soften the glass body, and then bringing a boring jig in contact with the softened portion of the glass body to thereby gradually form the glass body into a glass tube, when the boring jig is brought into contact with the glass body, voltages are applied to the glass tube from at least one pair of electrodes provided on the exterior of an outer circumferential surface of the glass body to thereby generate a voltage gradient in a nearly radial direction of the glass body.

Incidentally, the "boring" referred to herein includes not only an operation of making a hole in a columnar glass body but also an operation of increasing the inside diameter of a cylindrical glass body (or performing diameter expansion).

Further, in a method of manufacturing a glass tube according to the invention, which can achieve the object and which has the steps of heating a columnar or cylindrical glass body to thereby soften the glass body, and then bringing a boring jig in contact with the softened portion of the glass body to thereby gradually form the glass body into a glass tube, when the boring jig is brought into contact with the glass body, voltages are applied between the boring jig and an outer circumferential side of the glass body or to an inner circumferential side and an outer circumferential side of the glass tube to thereby generate a voltage gradient in a nearly radial direction of the glass body or the glass tube.

Furthermore, in a method of manufacturing a glass tube having the steps of heating a columnar or cylindrical glass body to thereby soften the glass body, and then bringing a boring jig in contact with the softened portion of the glass body to thereby gradually form said glass body into a glass tube, when the boring jig is brought into contact with the glass body, voltages are applied to the glass body from electrodes provided on exteriors of a first end surface and a second end surface in a longitudinal direction of the glass body to thereby generate a voltage gradient in a longitudinal direction of the glass tube.

Further, preferably, at least an edge or peripheral portion of said glass tube at which the voltage gradient is set to be low is removed after the glass tube is formed.

Furthermore, an apparatus for manufacturing a glass tube, which can achieve the object and which has a heating element disposed around a columnaror a cylindrical glass member, and also has a boring jig to be brought in contact with the glass body heated by said heating element, and which forms the glass body gradually into a glass tube by contacting the boring jig to the glass body, further comprises at least one pair of electrodes provided on the exterior of an outer circumferential surface of the glass body.

Further, in an apparatus for manufacturing a glass tube, which can achieve the object and which has a heating element disposed around a columnar or a cylindrical glass member, and also has a boring jig to be brought in contact with the glass body heated by said heating element, and which forms the glass body gradually into a glass tube by contacting the boring jig to the glass body, the boring jig is an electrode, and another electrode is provided on an outer circumferential side of the glass body, or electrodes are provided on an inner circumferential side and the outer circumferential side of the glass tube.

Furthermore, an apparatus for manufacturing a glass tube, which can achieve the object and which has a heating element disposed around a columnar or a cylindrical glass member, and also has a boring jig to be brought in contact with the glass body heated by said heating element, and which forms the glass body gradually into a glass tube by contacting the boring jig to the glass body, further comprises at least one pair of electrodes provided on exteriors of both end surfaces in a longitudinal direction of the glass body.

Further, preferably, the boring jig is surface-treated and at least a part of the boring jig, which makes contact with the glass body, contains one of silicon carbide, pyrocarbon, and metallic carbide.

Incidentally, in the case where the electrodes are provided on the inner circumferential side and the outer circumferential side of the glass tube, when the material of the heating element and the boring jig is graphite, which is a conductive material, such a heating element and the boring jig can be utilized as electrodes. Further, preferably, the content of impurities other than graphite, which are contained in the graphite of the boring jig, is equal to or less than 1 ppm.

### Brief Description of Drawings

FIG. 1 is a schematic longitudinal sectional view illustrating a first high purification apparatus available in a method of highly purifying a glass body according to a first embodiment of the invention;
FIGS. 2(a)-(b) are views illustrating the method of highly purifying a glass body according to the first embodiment of the invention;
FIG. 3 is a view illustrating another mode of the method of highly purifying a glass body according to the first embodiment of the invention;
FIG. 4 is a view illustrating another mode of the method of highly purifying a glass body according to the first embodiment of the invention;
FIGS. 5(a)-(b) are views illustrating another mode of the method of highly purifying a glass body according to the first embodiment of the invention;
FIG. 6 is a schematic longitudinal sectional view illustrating a second high purification apparatus available in a method of highly purifying a glass body according to a second embodiment of the invention;
FIG. 7 is a schematic longitudinal sectional view illustrating a third high purification apparatus available in methods of highly purifying a glass body according to modifications of a third embodiment and a fourth embodiment of the invention;
FIG. 8 is a schematic longitudinal sectional view illustrating a fourth high purification apparatus available in a method of highly purifying a glass body according to the third embodiment of the invention;
FIG. 9 is a view illustrating the method of highly purifying a glass body according to the third embodiment of the invention;
FIG. 10 is a schematic longitudinal sectional view illustrating a fifth high purification apparatus available in a method of highly purifying a glass body according to the fourth third embodiment of the invention;
FIG. 11 is a schematic sectional view illustrating modifications of the third embodiment and the fourth embodiment of the invention;
FIG. 12 is a view illustrating a method of highly purifying a glass pipe according to another embodiment of the invention;
FIG. 13 is a view illustrating a method of highly purifying a glass pipe according to another embodiment of the invention;
FIG. 14 is a schematic longitudinal sectional view illustrating a sixth high purification apparatus available in a method of highly purifying a glass body according to the fifth embodiment of the invention;
FIGS. 15(a)- (b) are views illustrating a method of highly purifying a glass body according to the fifth embodiment of the invention;
FIG. 16 is a schematic longitudinal sectional view illustrating a seventh high purification apparatus available in a method of highly purifying a glass body according to a sixth embodiment of the invention;
FIG. 17 is a schematic view illustrating a manufacturing apparatus for performing a method of manufacturing a glass tube according to a seventh embodiment of the invention;
FIG. 18 is a primary-part schematic view illustrating the vicinity of a furnace shown in FIG. 17;
FIG. 19 is a primary-part schematic view illustrating a modification of the apparatus according to the seventh embodiment;
FIG. 20 is a primary-part schematic view illustrating an apparatus according to an eighth embodiment of the invention;
FIG. 21 is a primary-part schematic view illustrating an apparatus according to a ninth embodiment of the invention;
FIG. 22 is a primary-part schematic view illustrating an apparatus according to a tenth embodiment of the invention;
FIG. 23 is a primary-part schematic view illustrating an apparatus according to an eleventh embodiment of the invention;
FIG. 24 is a schematic view illustrating an apparatus according to a twelfth embodiment of the invention; and
FIG. 25 is a primary-part schematic view illustrating an apparatus for performing a conventional method of manufacturing a glass tube,

Incidentally, in the drawings, reference numerals 1 and 2 designate electrodes, 11 a glass pipe, 11A a firstendsurfaceofaglasspipe, 11B a second end surface of the glass pipe, 16 a glass rod, 101 and 101a an apparatus for manufacturing a glass tube, 103 a glass rod (the glass body), 104 a dummy pipe (the glass body), 106 a glass tube, 110 an inlet side base, 111 a first feed support pedestal, 112 a first chuck, 120 an outlet side base, 121 a second feed support pedestal, 122 a second chuck, 130 a boring jig, 131 a plug (an electrode), 132 a support rod, 133 an electrode member (an electrode), 135 a securing member, 140, 140a, 140b a heating furnace, 141 a heating member (an electrode), 142 a coil, 143 and 145 spaces, 144 a muffle tube (an electrode), and 146 a die (an electrode).

### Best Mode for Carrying Out the Invention

### (First Embodiment)

A first embodiment of a method of highly purifying a glass body according to the invention is to apply voltages, in a nearly radial direction of the glass body, to a cylindrical glass body (hereunder referred to as a glass pipe) from a pair or plural pairs of electrodes, which are made to make contact with an outer circumferential surface side of the glass body, whereby impurities contained in the glass body are moved to the side of one of the electrodes according to a voltage gradient.

A high purification apparatus capable of performing a high purification method according to this embodiment is described hereinbelow.

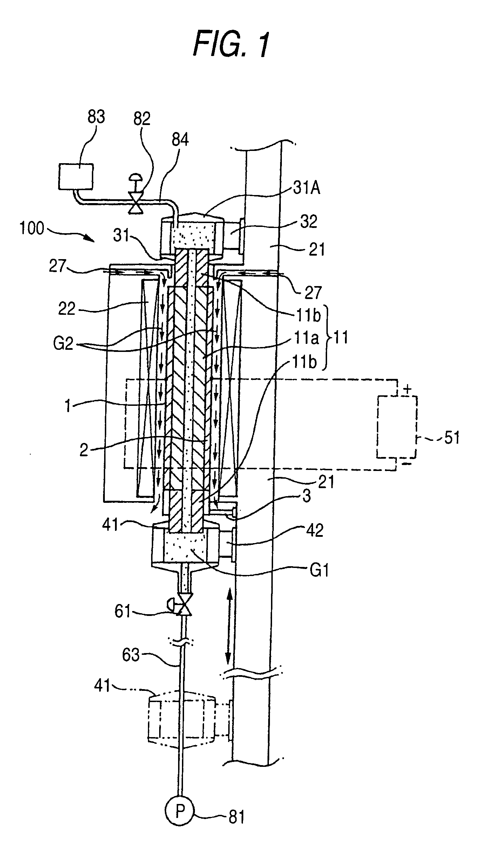

As illustrated in a schematic longitudinal sectional view of FIG. 1, a first high purification apparatus 100 has an elongated base 21, heating means 22 arranged at a specific distance along a longitudinal direction of the base 21 in such a way as to be able to surround the glass pipe 11, and a power supply 51.

The base 21 is disposed in a state that the longitudinal direction of the base 21 is an approximately vertical direction. A first chuck 31 enabled to grasp one end portion of the glass pipe 11 is attached to the base 21 through a first support pedestal 32 above the heating means 22. A second chuck 41 enabled to grasp the other end portion of the glass pipe 11 is attached to the exterior of the base 21 through a second support pedestal 42. The first chuck 31 and the second chuck 41 are configured in such a way as to be respectively rotated by motors (not shown) in synchronization with each other thereby to enable the glass pipe 11 to rotate around a central axis thereof, which is used as a rotation axis.

Further, the second support pedestal 42 is configured in such a way as to be able to vertically move so as to facilitate attachment/detachment of the glass pipe 11 to/from the first chuck 31 and the second chuck 41.

Furthermore, within the heating means 22, the pair of electrodes 1 and 2 is provided and disposed in such a way as to sandwich the outer circumferential surface of the glass pipe 11. These electrodes 1 and 2 each have a length that is comparable to the length of the heating means 22 and that permits the electrodes 1 and 2 to make contact with the entire length in the longitudinal direction of an effective portion 11a of the glass pipe 11. The electrodes 1 and 2 are supported by an electrode support portion 3 that is installed on the base 21. This electrode support portion 3 can move the electrodes 1 and 2 in such a manner as to allow the electrodes 1 and 2 to open and close in a radial direction of the glass pipe 11, and as to cause the electrodes 1 and 2 to make contact with the glass pipe 11 which is held by the first chuck 31 and the second chuck 41 while the glass pipe 11 is interposed between the electrodes 1 and 2. Moreover, a surface of each of the electrodes 1 and 2, which is brought in contact with the glass pipe 11, has a curved shape that has a curvature similar to the curvature of the outer circumferential surface of the glass pipe 11. Thus, a desired contact area between the glass pipe and each of the electrodes 1 and 2 can be obtained.

The power supply 51 is usually a d. c. power supply. For example, an electrically conductive wire drawn from a positive terminal is connected to the electrode 2, while an electrically conductive wire drawn from a negative terminal is connected to the electrode 1. That is, the electrode 2 is set to be an anode, while the electrode 1 is set to be a cathode. Incidentally, the anode and the cathode may be conversely set. Graphite and surface-treated graphite may be cited as materials of the electrodes 1 and 2. Especially, in view of the fact that the electrodes 1 and 2 make contact with the glass pipe 11, preferably, surface-treated graphite is the material of the electrodes 1 and 2. Preferably, graphite, on the surface of which pyrocarbon (PyC), metal carbide (NbC, TaC, TiC, or ZrC), or silicon carbide (SiC) is provided, may be cited as a practical example of the surface-treated graphite. Impurities can be prevented from entering the glass pipe 11 from the electrodes 1 and 2 by using such surface-treated graphite.

The heating means 22 has a cylindrical heating element. This heating element may be caused by, for example, a resistance heating method to generate heat.

Further, the material of the heating element provided in the heating means 22 may be exemplified by carbon or the like.

Incidentally, preferably, the content of impurities in carbon, such as graphite, is equal to or less than 1 ppm. Thus, it is difficult for impurities to enter the glass pipe 11.

Further, a gas pipe 84 enabled to communicate with a space in the grasped glass pipe 11 is provided at, for example, the top portion 31A of the first chuck. The gas pipe 84 is connected to an inner gas supply apparatus 83 through a valve 82 enabled to conduct opening/closing of a fluid passage. Furthermore, a gas pipe 63 enabled to communicate with a space in the grasped glass pipe 11 is provided at, for instance, the bottom of the second chuck 41. The gas pipe 63 is connected to an intake pump 81 through a valve 61 enabled to conduct opening/closing of a fluid passage.

Further, the first high purification apparatus 100 is provided with gas blowoff outlets 27 from which outer gas G2 is blown out from an upper part of the base 21 to a lower part thereof.

Next, a method of highly purifying a glass pipe according to the first embodiment of the invention, which uses the first high purification apparatus 100 is described.

During a state in which the second chuck 41 and the heating means 22 are sufficiently away from each other, the top of the glass pipe (or silica glass pipe) 11 is grasped by the first chuck 31. Incidentally, at that time, the electrodes 1 and 2 are put into an open state by driving the electrode support portion 3.

Meanwhile, the glass pipe 11 has the effective portion 11a which is to be performed high purification and dummy pipes 11b connected to an upper part and a lower part of the effective portion 11a. Portions grasped by the first chuck 31 and the second chuck 41 are dummy pipes 11b. The dummy pipes are usually low-purity low-end pipes and removed from the effective portion 11a after completion of the high purification. The effective portion 11a is set to have such a length that nearly the entire region thereof can be heated to a temperature, which is lower than 1300°C, by receiving heat from the heating means 22. Usually, the material of the effective portion 11a is high-purity SiO₂ for optical fibers, which contains 99.99 % SiO₂ by weight or more. However, the material of the effective portion 11a may contain additives, such as fluorine, boron, and germanium, for adjusting refraction index. In this case, the concentration of SiO₂ is lowered according to the quantity of these additives. Incidentally, it is assumed herein that these additives are not included in a category of impurity cation described in the present specification.

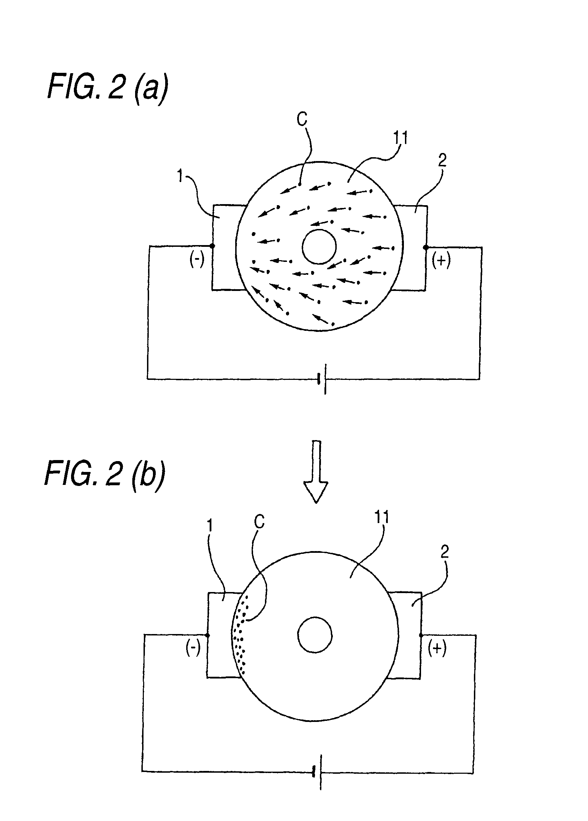

Subsequently, the second support pedestal 42 is vertically moved toward the heating means 22. The bottom of the glass pipe 11 is grasped by the second chuck 41. Then, the electrodes 1 and 2 are moved by the electrode support portion 3 toward the glass pipe 11, and brought into contact with the glass pipe 11 while the electrodes 1 and 2 sandwich a part of the outer circumferential surface of the glass pipe 11, as illustrated in FIGS. 2(a)-(b).

Subsequently, the valve 82 is brought into a closed state, while the valve 61 is put into an open state. Thus, the intake pump 81 is activated to thereby evacuate the gas from an inner space of the glass pipe 11. Thereafter, the valve 82 is put into an open state, while the valve 61 is brought into a closed state. Thus, the inner gas supply apparatus 83 is activated to supply inner gas G1 to the inner space. The valve 82 is brought into a closed state when necessary. The inner gas G1 is rare gas, such as argon gas, or nitrogen gas. It is preferable that the pressure of the inner gas G1 in the inner space of the glass pipe 11 is set at -0.5 kPa · gage to -1.5 kPa · gage by adjusting an amount of supplied inner gas G1. More preferably, the pressure of the inner gas G1 is positive. In this case, the pressure of the inner gas G1 is set at 0.1 kPa · gage to 1.0 kPa · gage.

Subsequently, the heating means 22 is activated to heat the glass pipe 11 at a temperature, which is less than 1300 °C, and the power supply 51 is activated to apply a voltage to the glass pipe 11 from the electrodes 1 and 2, while the outer gas G2, which is rare gas, such as argon gas, or nitrogen gas, is made to flow from the gas blowoff outlet 27 and from the upper part of the base 21 to the lower part thereof. Usually, the voltage is a d. c. voltage. Preferably, the voltage is set at a value within a range of 1 kV to 50 kV. It is preferable that the flow rate of the outer gas G2 is set at 10 l/min. to 20 l/min., and that the pressure of the outer gas G2 is set at 0.1 kPa · gage to 1.0 kPa · gage. Additionally, it is preferable that the pressure of the inner gas G1 is nearly equal to the pressure of the outer gas G2.

In this embodiment, as illustrated in FIGS. 2(a)-(b), the electrode 2 serving as an anode and the electrode 1 serving as a cathode are disposed in such a way as to face each other and as to make contact with the exterior of the outer circumferential surface of the glass pipe 11. Thus, a voltage, by which the direction of the voltage gradient is almost a radial direction of the glass pipe 11, is applied to the glass pipe 11. Further, the voltage gradient is negative in a direction from a side, with which the electrode 2 makes contact, to a side with which the electrode 1 makes contact. Incidentally, the meaning of the expression "the direction of the voltage gradient is almost a radial direction of the glass pipe 11" includes that a voltage difference is generated between the inner circumferential surface side and the outer circumferential surface of the glass pipe 11, and that a voltage difference is generated in a direction of a diameter of the glass pipe 11. In this embodiment, a voltage gradient is generated in a direction of a diameter of the glass pipe 11 between the electrodes 1 and 2.

FIGS. 2(a)-(b) show a sectional view in a radial direction of the glass pipe 11 in a state, in which the voltage gradient is generated, as a schematic view.

This voltage gradient causes impurity cations C (alkali metal ions, such as lithium ions, sodium ions, and potassium ions, and copper ions) contained in the glass pipe 11 to move towards the outer circumferential surface side of the glass pipe 11, with which the electrode 1 serving as a cathode makes contact, as illustrated in FIG. 2(a).

Then, this application of the voltage is continued for a certain time. Thus, the impurity cations C contained in the glass pipe 11 can be concentrated to the vicinity of a portion of the glass pipe, with which the electrode 1 makes contact, whereby the impurity cations C are unevenly distributed, as illustrated in FIG. 2(b).

At that time, preferably, the glass pipe 11 is heated and at least a portion of the glass pipe 11 to which the voltage is applied, namely, the effective portion 11a has a temperature of less than 1300 °C. As the temperature of the glass pipe 11 rises by heating the glass pipe 11, the diffusion coefficient of the impurity cation contained in the glass pipe 11 increases. This facilitates the movement of the cations in a direction in which the voltage gradient is negative.

In a state in which the heating temperature of the glass pipe 11 is low, the impurities are difficult to move into the glass pipe 11 from the electrodes 1 and 2. Consequently, flexibility in selecting materials used as those of the electrodes 1 and 2 is increased. Incidentally, it is necessary to set a processing time, in which the voltage is applied, to be long. In a case of some kind of the impurity cation, it is difficult to move the impurity cation in the glass pipe 11.

In a state in which the heating temperature of the glass pipe 11 is high, the processing time, during which the voltage is applied, can be reduced. Incidentally, the glass pipe 11 becomes apt to deform. Moreover, in a case of some material of the electrodes 1 and 2, the impurities are easily moved into the glass pipe 11. Therefore, preferably, the material, which can be used as that of the electrodes 1 and 2, are, for example, the surface-treated graphite.

Preferably, the effective portion 11a is heated and the temperature thereof is equal to or higher than 450 °C. More preferably, the effective portion 11a is heated and the temperature thereof is equal to or higher than 600 °C. More preferably, the effective portion 11a is heated and the temperature thereof is equal to or higher than 900 °C. In the case that the temperature of the effective portion 11a is equal to or higher than 450 °C, the removing of alkali metal can easily be performed. In the case that the temperature of the effective portion 11a is equal to or higher than 600 °C, the removing of divalent metal ions (Cu²⁺ and so on) can almost easily be performed. In the case that the temperature of the effective portion 11a is equal to or higher than 900 °C, the removing of iron ions (Fe³⁺) and nickel ions (Ni²⁺) can easily be performed.

Incidentally, when the glass pipe 11 is exposed to a temperature exceeding 1300 °C, the glass pipe 11 extremely deforms, whereby the necessity for adding a postforming process for making the inside diameter and the outside diameter of the highly purified glass pipe 11 constant in the longitudinal direction of the glass pipe 11 is extremely increased.

Therefore, the preferred lower limit value of the heating temperature of the glass pipe 11 is 450 °C or 600 °C, while the preferred upper limit value thereof is less than 1300 °C (this is the same with embodiments to be described later).

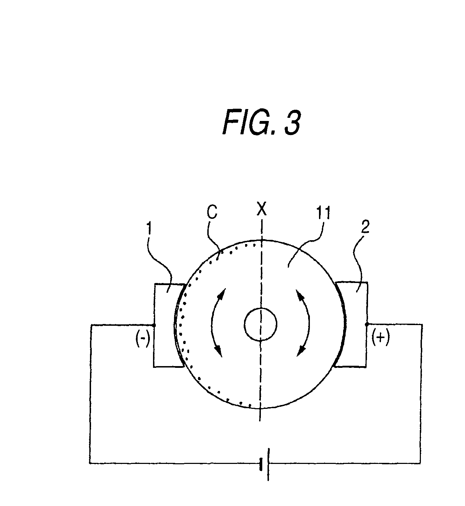

In a process in which the voltage is applied, preferably, the glass pipe 11 is swung around a central axis thereof, which is used to as a rotation axis, in a circumferential direction with respect to the electrodes 1 and 2 by reversing a rotating direction of each of the first chuck 31 and the second chuck 41 at a short cycle while the first chuck 31 and the second chuck 41 are rotated in synchronization with each other. For example, the glass pipe 11 is swung while half-circumference zones (zones partitioned by dashed lines X in FIG. 3) of the outer circumferential surface of the glass pipe 11 make contact with the electrodes 1 and 2, respectively, as shown in this figure. Thus, the voltage can be evenly applied to the entire section in radial directions of the glass pipe 11. Consequently, the movement of the impurity cations can be effectively promoted. Moreover, the impurity cations can be unevenly distributed in a wide range in the vicinity of the outer circumferential surface of the glass pipe 11. Thus, the impurity cations can be unevenly distributed in a shallow region close to the outer circumferential surface of the glass pipe 11. Consequently, the highly purified region can effectively be increased.

Additionally, by swinging the glass pipe, heat received by the glass pipe 11 from the heating means 22 can be more uniformized in a circumferential direction of the glass pipe. Thus, deformation of the glass pipe 11, which occurs by unevenness of the temperature distribution in the circumferential direction of the glass pipe 11, can be more surely reduced. Especially in a case that the heating means in the high purification apparatus are partially provided in the circumferential direction of the glass pipe, it is preferable to swing the glass pipe.

Preferably, after completion of performing the process of applying the voltage, a surface removing process of removing a portion of the glass pipe extending from the outer circumferential surface inward to a predetermined depth is performed. Thus, the impurity cations unevenly distributed in the outer circumferential surface side portion of the glass pipe 11 can be removed, whereby the glass pipe, in which only the highly purified portion remains, can be obtained. The surface removing process can be performed by utilizing grinding processing, chemical etching processing using hydrofluoric acid, or flame polishing.

Preferred implementing conditions in the method of highly purifying a glass body (or glass pipe) according to the first embodiment described hereinabove are shown below.
Outside diameter of the glass pipe: 120 mm
Inside diameter of the glass pipe: 10 mm to 15 mm
Length in a longitudinal direction of the glass pipe: 1200 mm
Temperature of the heating means: 1200 °C
Applied voltage: 40 kV
Voltage application processing time: 30 hours

Depth of the portion removed in the surface removing process from the outer circumferential surface of the glass pipe: 1.5 mm

Width of (each one of) the electrodes: 48 mm

The term "the width of the electrodes" designates the length of a part of the electrode, at which the electrode makes contact with the glass body, to be measured tangentially and rectilinearly in a cross-section of the glass body, as illustrated in, for example, FIGS. 2(a)-(b).

The content concentration of the impurity cations contained in the effective portion 11a of the glass pipe 11, on which high purification processing has been performed under such conditions, can be made to be equal to or less than 0.01 ppm by weight.

Also, examples of the relation among the heating temperature, the applied voltage, and the processing time in the method of highly purifying a glass body according to the first embodiment are shown in Table 1.

**Table 1**

| | Heating Temperature (°C) | Applied Voltage (kV) | Processing Time (h) |
|---|---|---|---|
| Example 1 | 450 | 50 | 200 |
| Example 2 | 600 | 45 | 80 |
| Example 3 | 900 | 40 | 50 |

In the case of Example 1 shown in Table 1, impurity alkali metal cations can be moved. In the case of Example 2 shown in Table 1, in addition to the alkali metal cations, metal ions, whose valency is equal to or less than 2, can be moved. In the case of Example 3, in addition to the movable impurity cations in the cases of Example 1 and Example 2, other impurity cations can be moved.

In the first high purification apparatus 100 shown in FIG. 1, the voltage is applied to the glass pipe 11 by using the pair of electrodes 1 and 2. In this case, preferably, the width of (each one of) the electrodes ranges from 20% to 40% of the outside diameter of the glass body.

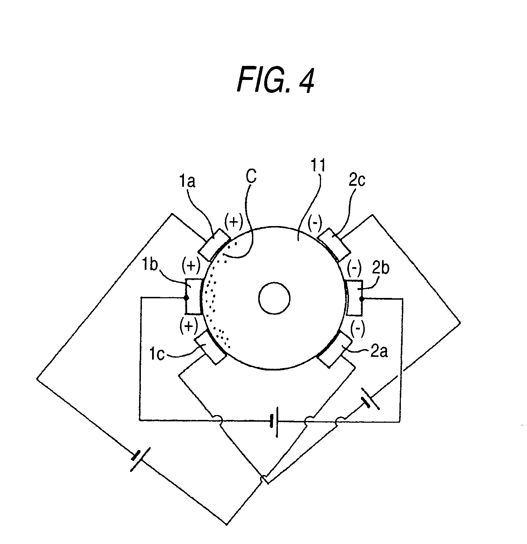

Furthermore, in the apparatus, the voltage may be applied by providing plural pairs of electrodes therein. For example, as illustrated in a schematic view shown in FIG. 4, the apparatus may comprise three pairs of electrodes including electrodes 1a, 1b, and 1c, which serve as cathodes, and electrodes 2a, 2b, and 2c, which serve as anodes. At that time, the electrodes 1a, 1b, and 1c are disposed in a half-circumference zone of the outer circumferential surface of the glass pipe 11. The electrodes 2a, 2b, and 2c are disposed in the other half-circumference zone. In this case, preferably, the width of (each one of) the electrodes ranges from 10% to 30% of the outside diameter of the glass body. Preferably, then, the voltages respectively applied to the paired electrodes 1a and 2a, the paired electrodes 1b and 2b, and the paired electrodes 1c and 2c are set. For instance, a voltage of 30 kV is applied to the electrodes 1b and 2b placed at the center, among the three pairs of electrodes. A voltage of 25 kV is applied to the other electrodes, that is, the electrodes 1a and 2a, and the electrodes 1c and 2c. Consequently, the impurity cations can be effectively moved to and around portion, at which the electrode 1b makes contact with the glass pipe, and unevenly distributed.

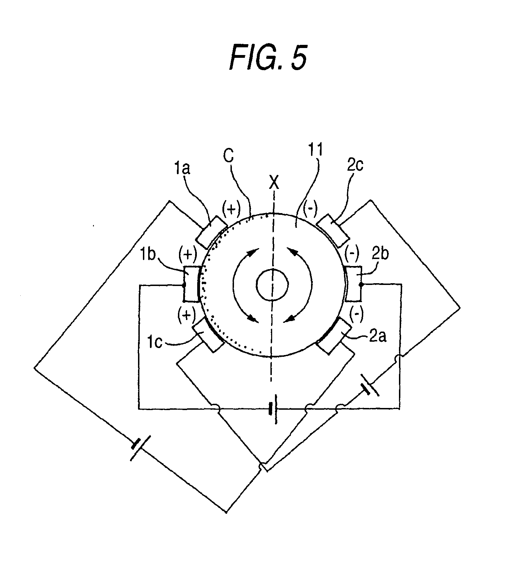

Further, as shown in FIG. 5, in the voltage application process, preferably, the glass pipe 11 is swung in the circumferential direction around the central axis thereof used as a rotation axis with respect to the electrodes 1 and 2, similarly as described with reference to FIG. 3. Consequently, the movement of the impurity cations can effectively be promoted. Moreover, the impurity cations can be unevenly distributed in a wide range in the vicinity of the outer circumferential surface of the glass pipe 11.

Preferred implementing conditions in the method of highly purifying a glass body (or glass pipe) according to the embodiment described with reference to FIG. 4 are shown below.
Outside diameter of the glass pipe: 120 mm
Inside diameter of the glass pipe: 10 mm to 15 mm
Length in a longitudinal direction of the glass pipe: 1200 mm
Temperature of the heating means: 1100 °C
Applied voltage (to the electrodes 1b and 2b): 30 kV
Applied voltage (to the electrodes 1a and 2a and electrodes 1c and 2c): 25 kV
Voltage application processing time: 30 hours

Depth of the portion removed in the surface removing process from the outer circumferential surface of the glass pipe: 1.5 mm
Width of (each one of) the electrodes: 36 mm

The content concentration of the impurity cations contained in the effective portion 11a of the glass pipe 11, on which high purification processing has been performed under such conditions, can be made to be equal to or less than 0.008 ppm by weight.

According to the method of highly purifying a glass body according to the first embodiment of the invention described in the foregoing description, high purification can be performed by simultaneously decreasing deformation of a glass pipe. The postforming process for making the inside diameter and the outside diameter of the glass pipe constant in the longitudinal direction of the glass pipe (a process of cutting partially or entirely the inner circumferential surface and the outer circumferential surface of the glass pipe or of reducing or increasing partially or entirely the diameter thereof) can be omitted, and thereby the manufacturing cost of the highly purified glass pipe can extremely be reduced. Incidentally, the "cutting" referred to herein designates processing of a glass body to be performed by, for example, a numerically controlled lathe in such a way as to make the diameter of the glass body constant in the longitudinal direction of the glass body. Meanwhile, the surface removing process is a process of removing an outer circumferential surface portion having a predetermined depth from a glass pipe, which has been highly purified while deformation of the glass pipe has been decreased, by performing etching or cylindrical grinding. This process is limited to a process of removing the portion having a predetermined depth, and extremely easy to perform, as compared with the postforming process to be performed due to the deformation of the glass pipe.

### (Second Embodiment)

Although the aforementioned first embodiment of the method of highly purifying a glass body is an embodiment adapted to simultaneously apply voltages in the entire longitudinal direction of the effective portion of the glass pipe, a second embodiment of the method of highly purifying a glass body according to the invention is adapted to serially apply voltages, in a nearly radial direction of the glass pipe, to the glass pipe from electrodes put in contact with the outer circumferential surface side of the glass pipe.

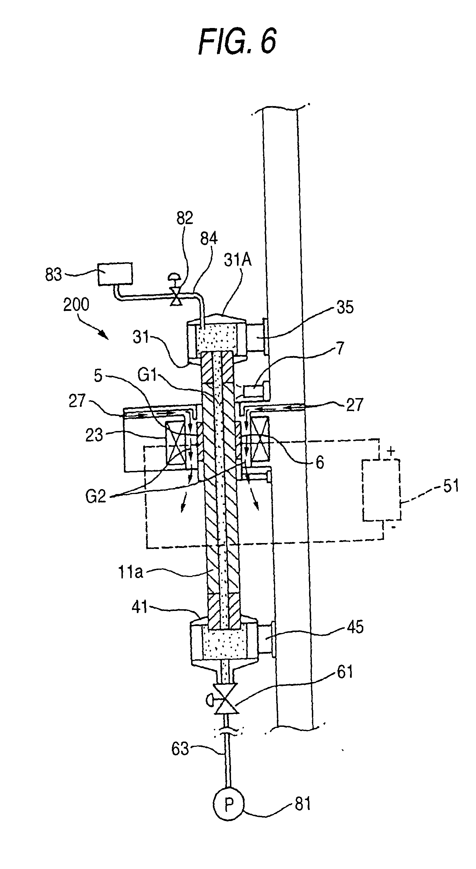

As shown in a schematic longitudinal sectional view of FIG. 6, a second high purification apparatus 200 is provided with heating means 23, whose longitudinal length is set to be short, instead of the heating means 22 of the first high purification apparatus 100. The high purification apparatus 200 is also provided with electrodes 5 and 6, whose length is nearly equal to that of the heating means 23, instead of the electrodes 1 and 2.

Also, the second high purification apparatus 200 has a first support pedestal 35 and a second support pedestal 45, instead of the first support pedestal 32 and the second support pedestal 42 of the first high purification apparatus 100. The first support pedestal 35 and the second support pedestal 45 each have a motor (not shown) and are configured in such a manner as to be able to vertically move at predetermined speeds along the base 21.

Next, a method of highly purifying a glass pipe according to the second embodiment of the invention, which uses the second high purification apparatus 200, is described mainly by citing the differences between the first embodiment and the second embodiment.

Similarly to the first embodiment, the end portions of the glass pipe 11 are grasped by the first chuck 31 and the second chuck 41. The effective portion 11a has a length in the longitudinal direction thereof, which is sufficiently longer than the length in the longitudinal direction of the heating means 23, such that a partial region of the effective portion 11a can be heated to a temperature, which is lower than 1300°C, by receiving heat from the heating means 23.

In the second embodiment, the glass pipe 11 is heated to a temperature, which is lower than 1300°C, by moving the first support pedestal 35 and the second support pedestal 45 along the base 21 to thereby perform relative movement of the glass pipe 11 with respect to the heating means 23. Moreover, the application of voltages in the nearly radial direction can be performed on the entire glass pipe 11. Incidentally, the heating means may be moved instead of the glass pipe 11.

Similarly to the fist embodiment, preferably, the second embodiment is carried out by swinging the glass pipe 11 around the central axis thereof, which is used as a rotation axis, in the circumferential direction of the glass pipe 11 with respect to the electrodes 5 and 6. Also, the aforementioned surface evenly removing process may be performed subsequently to the voltage application process.

According to the aforementioned second embodiment, advantages similar to those of the first embodiment can be obtained.

Incidentally, preferably, a cooling means 7 is provided in the vicinity of an upper portion of the heating means 23, as illustrated in FIG. 6, and forcibly cools a portion of the glass pipe 11, which is heated by the heating means 23 and also applied with a voltage, and in which impurity cations are unevenly distributed.

The cooling means may be means for blowing out cooling gas, such as inactive gas and cooling air, to the glass pipe 11, or alternatively, may be a cooling jacket (not shown) adapted to cover the periphery of the glass pipe 11. Preferably, the cooling is performed and the temperature of a cooled portion of the glass pipe 11 is equal to or less than 800 °C or less than 500 °C.

The cooling is forcibly performed to lower the temperature to a value at which the diffusion coefficient of the impurity cations is sufficient low and it is difficult to move the impurity cations. Consequently, the impurity cations can be made to remain unevenly distributed to the outer circumferential portion of the glass pipe, before the unevenly distributed impurity cations are diffused in the glass pipe 11 immediately after the impurity cations are unevenly distributed to the glass pipe 11. Therefore, advantages of the method of highly purifying a glass body according to the invention can maximally be obtained.

Incidentally, in the description of the first and second embodiments, the cylindrical glass pipe has been described as an example of the glass body, on which the high purification processing is performed. However, a glass body shaped like a column (hereunder referred to as a glass rod) may be employed as an object on which the high purification processing is performed. In this case, the high purification of the glass rod can be performed by using an apparatus and a method, which are similar to the apparatus and the method used for highly purifying the glass pipe. Incidentally, there is no need for using inner gas to be fed on the inner side of the glass pipe.

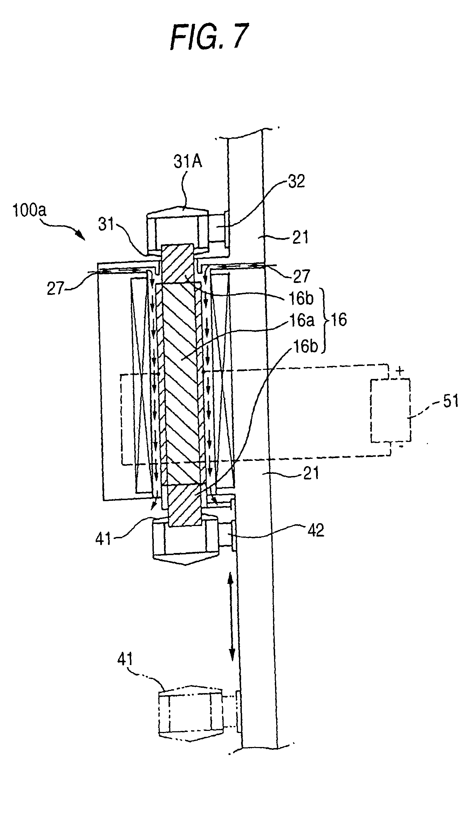

As illustrated in FIG. 7, a third high purification apparatus 100a suitably used for highly purifying a glass rod is obtained by removing constituent elements, which are employed for using the inner gas G1, from the first high purification apparatus 100 shown in FIG. 1.

The glass rod 16 is configured by respectively connecting dummy rods 16b to the top and the bottom of the effective portion 16a to be highly purified. The material of the effective portion 16a is similar to that of the effective portion 11a of the aforementioned glass pipe 11. The material of the dummy rods 16b is similar to that of the dummy pipes 11b of the aforementioned glass pipe 11.

Further, the third high purification apparatus 100a shown in FIG. 7 is used in the case where voltages are simultaneously applied in the entire longitudinal direction of the effective portion 16a. However, this apparatus may employ a method of sequentially applying nearly diametral voltages to the glass rod 16 in the longitudinal direction of the glass rod 16. For example, as described with reference to FIG. 6, high purification can be performed on the glass rod 16, similarly to the case of serially applying nearly diametral voltages to the glass pipe 11 in the longitudinal direction of the glass pipe 11.

Further, the glass rod is a solid glass body, differently from the glass pipe in which a space has been formed. Thus, as compared with the glass pipe, it is hard for thermal deformation to occur in the glass rod. Consequently, an upper limit to the heating temperature at high purification can be set to be higher than that in the case of high purification of the glass pipe. A preferred upper limit value of the heating temperature is 1450 °C.

For instance, in the case that high purification is performed on the glass rod under conditions nearly similar to those for Example 1 to Example 2 (see Table 1) described in the description of the first embodiment, a processing time is 24 hours when the heating temperature is 1400°C and the applied voltage is 40 kV. Thus, impurity cations similar to those in the case of Example 3 can be moved.

### (Third Embodiment)

A third embodiment of the method of highly purifying a glass body according to the invention is to apply a voltage, in a nearly radial direction of a glass pipe, to the glass pipe from electrodes disposed on the outer circumferential side of the glass pipe and to move impurities contained in the glass body toward the outer circumferential side or toward the inner circumferential side by utilizing the gradient of the voltage.

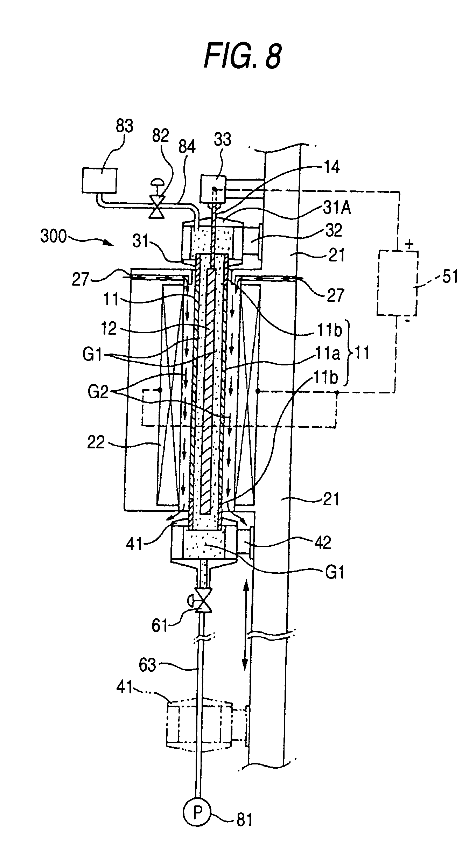

As shown in a schematic longitudinal sectional view of FIG. 8, a fourth high purification apparatus 300 has an elongated base 21, heating means 22 arranged at a specific distance along a longitudinal direction of the base 21 in such a way as to be able to surround a glass pipe 11, and a power supply 51. The base 21 is disposed in a state that the longitudinal direction of the base 21 is an approximately vertical direction. A first chuck 31 enabled to grasp one end portion of the glass pipe 11 is attached to the base 21 through a first support pedestal 32 above the heating means 22. A second chuck 41 enabled to grasp the other end portion of the glass pipe 11 is attached to the exterior of the base 21 through a second support pedestal 42 below the heating means 22. The first chuck 31 and the second chuck 41 are configured in such a manner as to be respectively rotated by motors (not shown) in synchronization with each other thereby to enable the glass pipe 11 to rotate around a central axis thereof, which is used as a rotation axis.

Further, the second support pedestal 42 is configured in such a manner as to be able to vertically move so as to facilitate attachment/detachment of the glass pipe 11 to/from the first chuck 31 and the second chuck 41.

An electrode fixing member 33 is attached above the first chuck 31. An elongate inner electrode 12 is grasped by the electrode fixing member 33 through an electrically conductive electrode connecting portion 14 penetrating through a top portion 31A of the first chuck. Incidentally, the inner electrode 12 is configured in such a way as to downwardly vertically extend to the vicinity of the bottom of the heating means 22. The inner electrode 12 is set to have a maximum outside diameter in a transverse section th.ereof which is smaller than an inside diameter of the glass pipe 11 on which high purification processing is performed. The inner electrode 12 is configured in such a way as to not make contact with the glass pipe 11.

Further, a gas pipe 84 enabled to communicate with a space in the grasped glass pipe 11 is provided at, for example, the top portion 31A of the first chuck. The gas pipe 84 is connected to an inner gas supply apparatus 83 through a valve 82 enabled to conduct opening/closing of a fluid passage. Moreover, a gas pipe 63 enabled to communicate with a space in the grasped glass pipe 11 is provided at, for instance, the bottom of the second chuck 41. The gas pipe 63 is connected to an intake pump 81 through a valve 61 enabled to conduct opening/closing of a fluid passage.

The power supply 51 is usually a d. c. power supply. For example, an electrically conductive wire drawn from a positive terminal is connected to the electrode connecting portion 14. The aforementioned graphite and surface-treated graphite can be cited as materials of the inner electrode 12 and the electrode connecting portion 14. Especially, preferably, surface-treated graphite is the material of the inner electrode 12.

On the other hand, an electrically conductive wire drawn from the negative terminal of the power supply 51 is connected to a heating element of the heating means 22. The material of the heating element can be preferably exemplified by carbon or the like.

Incidentally, preferably, the content of impurities of carbon, such as graphite, is equal to or less than 1 ppm. Consequently, it becomes hard for impurities to enter the glass pipe 11.

Further, the fourth high purification apparatus 300 is provided with gas blowoff outlets 27 from which outer gas G2 is blown out from an upper part of the base 21 to a lower part thereof.

Next, a method of highly purifying a glass pipe according to the third embodiment of the invention, which uses the fourth high purification apparatus 300 is described.

During a state in which the second chuck 41 and the heating means 22 are sufficiently away from each other, the top of the glass pipe (or silica glass pipe) 11 is grasped by the first chuck 31 and the inner electrode 12 is accommodated in the inner space of the glass pipe 11.

Incidentally, the glass pipe 11 is similar to that described in the description of the first embodiment.

Subsequently, the second support pedestal 42 is vertically moved toward the heating means 22. The bottom of the glass pipe 11 is grasped by the second chuck 41. In this case, the central axis of the glass pipe almost coincides with that of the inner electrode 12. The glass pipe 11 is mounted in such a way as not to make contact with the inner electrode 12.

Subsequently, the valve 82 is brought into a closed state, while the valve 61 is put into an open state. Thus, the intake pump 81 is activated to thereby evacuate the gas from an inner space of the glass pipe 11. Thereafter, the valve 82 is put into an open state, while the valve 61 is brought into a closed state. Thus, the inner gas supply apparatus 83 is activated to supply inner gas G1 to the inner space. The valve 82 is brought into a closed state when necessary. The inner gas G1 is rare gas, such as argon gas, or nitrogen gas. It is preferable that the pressure of the inner gas G1 in the inner space of the glass pipe 11 is set at -0.5 kPa · gage to -1.5 kPa · gage by adjusting an amount of supplied inner gas G1. Alternatively, preferably, the pressure of the inner gas G1 is positive. In this case, the pressure of the inner gas G1 is set at 0.1 kPa · gage to 1.0 kPa · gage.

Subsequently, a voltage application process is performed by activating the heating means 22 to heat the glass pipe 11 at a temperature, which is less than 1300 °C, and activating the power supply 51 to apply a voltage to the glass pipe 11 from the electrodes 1 and 2 while the outer gas G2, which is rare gas such as argon gas, or nitrogen gas, is made to flow from the gas blowoff outlet 27 and from the upper part of the base 21 to the lower part thereof. Usually, the voltage is a d. c. voltage. Preferably, the voltage is set at a value within a range of 1 kV to 50 kV. It is preferable that the flow rate of the outer gas G2 is set at 10 l/min. to 20 l/min., and that the pressure of the outer gas G2 is set at 0.5 kPa · gage to 1.5 kPa · gage.

In this embodiment, the electrode 12 serving as an anode and the heating means 22 serving as a cathode are disposed on the interior and the exterior of the glass pipe 11 in such a way as to face each other. The inner gas G1 intervenes between the inner electrode 12 and the glass pipe 11, while the outer gas G2 intervenes between the cathode and the glass pipe 11. Consequently, a voltage, by which the direction of the voltage gradient is almost a radial direction of the glass pipe 11, is applied to the glass pipe 11. Further, the voltage gradient is negative in a direction from the inner circumferential surface side of the glass pipe 11 to the outer circumferential surface side. Incidentally, in this embodiment, the case, in which the direction of the voltage gradient is almost a radial direction of the glass pipe 11, includes a case in which the direction of the voltage gradient is slightly deviated from the radial direction of the glass pipe 11 due to, for instance, the deviation of the inner electrode 12 from the central axis of the glass pipe 11.

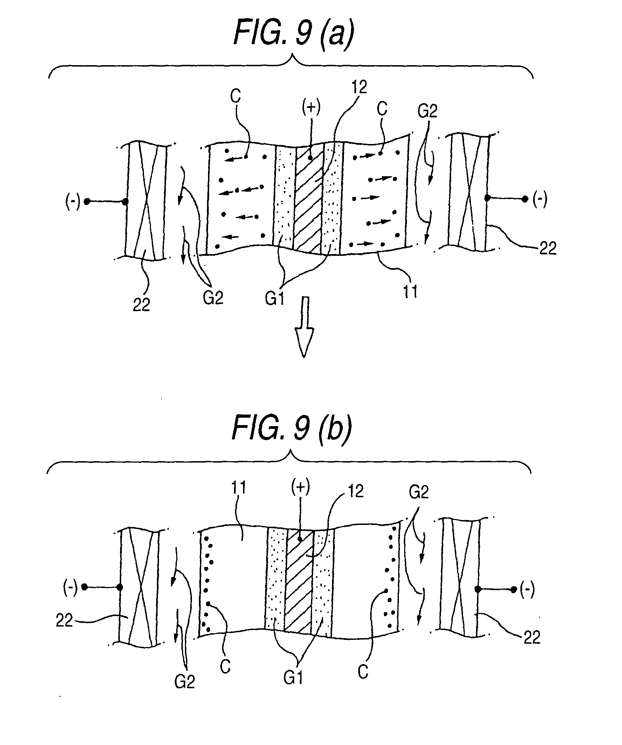

Consequently, the impurity cations C contained in the glass pipe 11 to move in a direction of the outer circumferential surface side of the glass pipe 11, as illustrated in FIG. 9(a), which is a sectional view of a primary part of the apparatus shown in FIG. 8.

Then, the voltage application process is continued for a certain time. Thus, the impurity cations C contained in the glass pipe 11 can be diffused from the outer circumferential surface of the glass pipe 11 and evacuated from the first high purification apparatus 100 by utilizing the flow of the outer gas G2, or can be unevenly distributed in the vicinity of the outer circumferential surface of the glass pipe 11, as illustrated in a primary-part sectional view of FIG. 9(b).

Furthermore, as described above, it is preferable that the glass pipe 11 is heated at a temperature that is less than 1300°C.

In this embodiment, the voltage application process is performed while the glass pipe 11 is rotated around the central axis thereof, which is used as a rotation axis, at a rotational speed, which is within a range of 1 rpm to 100 rpm, by rotating the first chuck 31 and the second chuck 41 in synchronization with each other. Incidentally, this case is assumed to include a case where the central axis of the glass pipe 11 is somewhat deviated from the rotation axis.

Heat received by the glass pipe 11 from the heating means 22 can be more uniformized in the circumferential direction thereof by setting the rotation speed to be equal to or more than 1 rpm. Thus, deformation of the glass pipe 11, which occurs by unevenness of the temperature distribution in the circumferential direction thereof, can be more effectively reduced. Especially in a case that the heating means in the high purification apparatus are not continuously provided in the circumferential direction of the glass pipe, it is preferable that the glass pipe is rotated at a rotational speed, which is within the aforementioned range.

On the other hand, deformation of the glass pipe 11, which occurs by a centrifugal force, can be effectively decreased by setting the rotational speed to be equal to or less than 100 rpm. Especially, preferably, when the rotational speed is set to be equal or less than 20 rpm, the deformation of the glass pipe 11, which occurs by a centrifugal force, can be more surely decreased.

After completion of the voltage application process, a surface evenly-removing process of evenly removing a portion of the glass pipe 11 extending from the outer circumferential surface inward to a predetermined depth may be performed when necessary. Consequently, the high purification of the glass pipe 11 can be more surely performed.

Preferred implementing conditions in the method of highly purifying a glass pipe according to the third embodiment are shown below.

Outside diameter of the glass pipe: 75 mm to 150 mm

Inside diameter of the glass pipe: 52.5 mm to 105 mm

Length in a longitudinal direction of the glass pipe: 1000 mm to 1500 mm

Voltage application processing time: 20 hours to 30 hours

Depth of the portion removed in the surface removing process from the outer circumferential surface of the glass pipe: 0.1 mm to 0.3 mm

According to the method of highly purifying a glass body according to the third embodiment of the invention described in the foregoing description, high purification can be performed by simultaneously decreasing deformation of a glass pipe. The postforming process for making the inside diameter and the outside diameter of the glass pipe constant in the longitudinal direction thereof (a process of cutting partially or entirely the inner circumferential surface and the outer circumferential surface of the glass pipe or of reducing or increasing partially or entirely the diameter thereof) can be omitted. Thus, the manufacturing cost of the highly purified glass pipe can extremely be reduced. Incidentally, the surface evenly-removing process to be added when needed is a process of removing an outer circumferential surface portion having a predetermined depth from the circumferential surface of a glass pipe, which is highly purified while deformation thereof is decreased. This process is limited to a process of evenly removing the portion having a predetermined depth, and extremely easy to perform, as compared with the post forming process to be performed due to the deformation thereof. Incidentally, the electrodes may be adapted to be brought into contact with the glass pipe.

### (Fourth Embodiment)

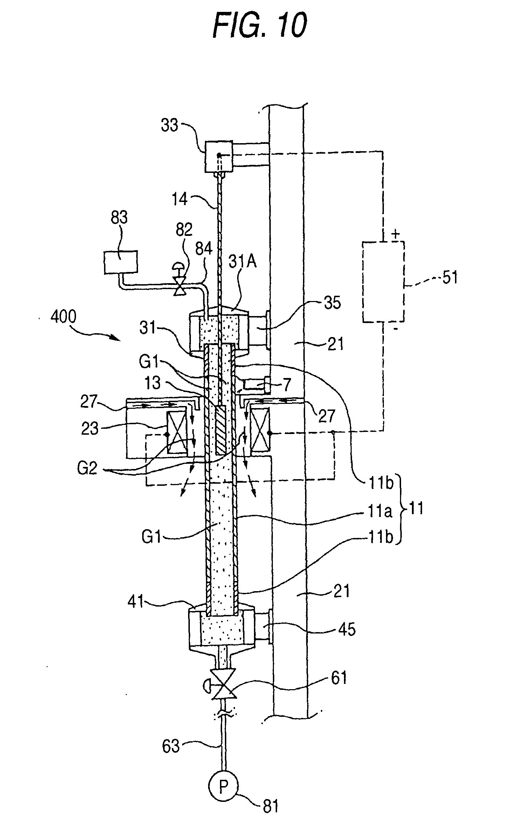

As shown in a schematic longitudinal sectional view of FIG. 10, a fifth high purification apparatus 400 is provided with heating means 23, whose longitudinal length is set to be short, instead of the heating means 22 of the fourth high purification apparatus 300. The high purification apparatus 400 is also provided with an inner electrode 13, whose length is nearly equal to that of the heating means 23, instead of the inner electrode 12.

Also, the fifth high purification apparatus 400 has a first support pedestal 35 and a second support pedestal 45, instead of the first support pedestal 32 and the second support pedestal 42 of the fourth high purification apparatus 300. The first support pedestal 35 and the second support pedestal 45 each have a motor (not shown) and are configured in such a manner as to be able to vertically move at predetermined speeds along the base 21.

Next, a method of highly purifying a glass pipe according to the fourth embodiment of the invention, which uses the fifth high purification apparatus 400, is described mainly by citing the differences between the third embodiment and the fifth embodiment.

Similarly to the third embodiment, end portions of the glass pipe (or silica glass pipe) 11 are grasped by the first chuck 31 and the second chuck 41 and the inner electrode 13 is accommodated in the inner space of the glass pipe 11. The effective portion 11a has a length in the longitudinal direction thereof, which is sufficiently longer than the length in the longitudinal direction of the heating means 23, and a partial region of the effective portion 11a can be heated to a temperature, which is lower than 1300°C, by receiving heat from the heating means 23.

In the fourth embodiment, the glass pipe 11 is heated to a temperature, which is lower than 1300°C, by moving the first support pedestal 35 and the second support pedestal 45 along the base 21 to thereby perform relative movement of the glass pipe 11 with respect to the heating means 23. Moreover, the application of voltages in the nearly radial direction can be performed on the entire glass pipe 11. Incidentally, the heating means may be moved instead of the glass pipe 11.

Further, in this embodiment, preferably, after the application of the voltage, the glass pipe 11 is cooled down by using the cooling means 7 illustrated in FIG. 6.

Similarly to the third embodiment, in the fourth embodiment, the voltage application process is performed while the glass pipe 11 is rotated around the central axis thereof, which is used as a rotation axis, at a rotational speed which is within a range of 1 rpm to 100 rpm. Incidentally, the surface removing process may be performed after the voltage application process.

According to the aforementioned fourth embodiment, advantages similar to those of the third embodiment can be obtained.

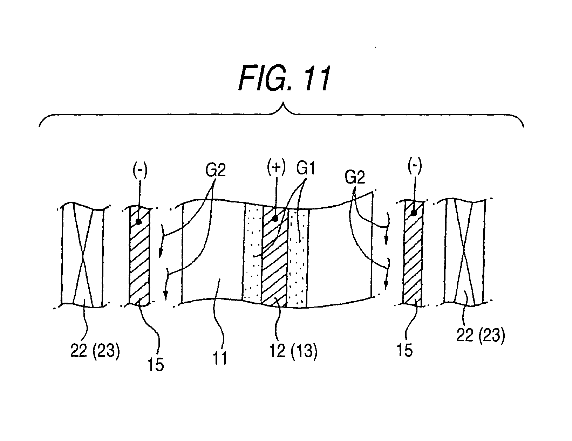

In the third embodiment and the fourth embodiment, although the heating means 22 and 23 are not connected to the power supply, as illustrated in a schematic sectional view of FIG. 11, instead, an outer electrode 15 to be connected to the power supply may additionally be disposed between the outer circumferential surface of the glass pipe 11 and each of the heating means 22 and 23.

Further, although the inner electrode is used as an anode and the outer electrode or the heating means is used as a cathode in the third embodiment and the fourth embodiment, another embodiment using the inner electrode as a cathode and also using the outer electrode or the heating means as an anode can be exemplified.

In this case, similarly to the third and fourth embodiments, a voltage, by which the direction of the voltage gradient is almost a radial direction of the glass pipe 11, is applied to the glass pipe 11. Further, the voltage gradient is negative in a direction from the outer circumferential surface side of the glass pipe 11 to the inner circumferential surface side.

Consequently, impurity cations C (alkali metal ions, such as lithium ions, sodium ions, and potassium ions, and copper ions) contained in the glass pipe move in a direction of the inner circumferential surface side of the glass pipe.

Thus, the high purification of a glass pipe can be more surely conducted by performing the surface removing process of removing a portion of the glass pipe extending from the inner circumferential surface to a predetermined depth.

Furthermore, although in third and fourth embodiments, the inner space of the glass pipe 11 is filled with the inner gas, while the outer gas is made to flow, the embodiments may be modified so that the inner gas is made to flow in the inner space of the glass pipe and the outer gas is made to flow in the base.

Further, although an embodiment using the inner gas G1 and the outer gas G2 in the voltage application process is exemplified in the description of the aforementioned embodiment, the method of high purification of a glass pipe according to the invention is not limited thereto.

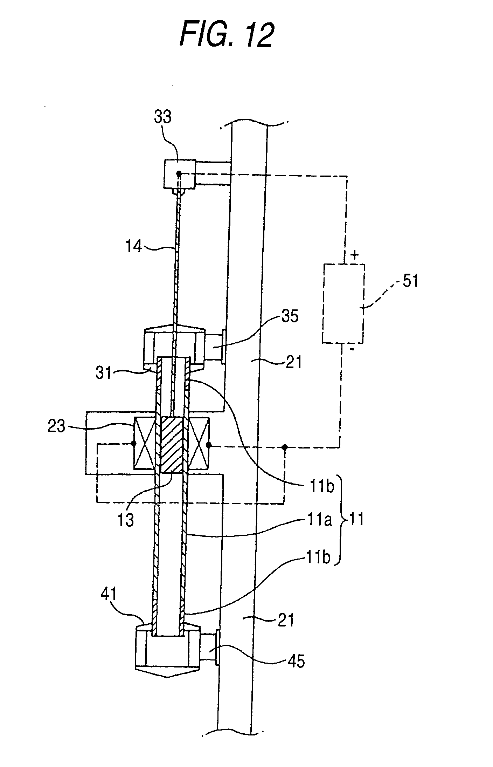

For example, an embodiment is adapted so that the inner electrode is slide-contacted with the inner circumferential surface of the glass pipe, which rotates around the central axis to be used as a rotation axis. In this adaptation, this is done without using the inner gas G1. Another embodiment is adapted so that the outer electrode is slide-contacted with the outer circumferential surface of the glass pipe, which rotates around the central axis to be used as a rotation axis. In this adaptation, this is done without using the outer gas G2. Also, another embodiment is obtained by combining the foregoing embodiments with each other (see FIG. 12, in this case, the inner gas G1 and the outer gas G2 are unnecessary). The above-mentioned surface-treated graphite is preferably exemplified for the electrode to be slide-contacted with the glass pipe, so as to surely decrease the movement of the impurities from the electrode to the glass pipe.

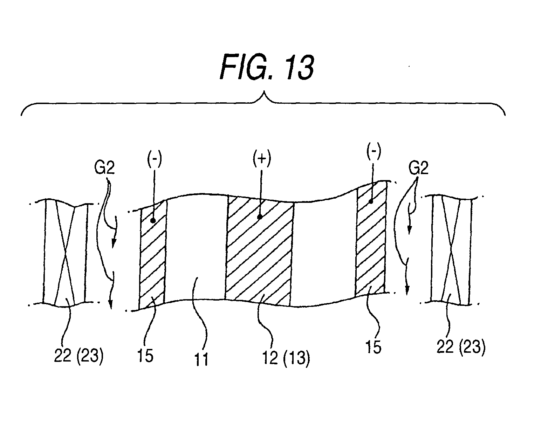

Further, although the heating means 22 and 23 are not connected to the power supply as illustrated in a schematic sectional view of FIG. 13, instead, the outer electrode 15, which is connected to the power supply and slide-contacted with the outer circumferential surface of the glass pipe 11, may additionally be disposed between the outer circumferential surface of the glass pipe 11 and each of the heating means 22 and 23.

Preferred implementing conditions in the method of highly purifying a glass body (or glass pipe) according to the embodiment shown in FIG. 12 are shown below.
Outside diameter of the glass pipe: 150 mm
Inside diameter of the glass pipe: 10 mm to 15 mm
Length in a longitudinal direction of the glass pipe: 1500 mm
Temperature of the heating means: 1100 °C
Applied Voltage: 30kV
Voltage application processing time: 30 hours
Depth of the portion removed in the surface evenly-removing process from the outer circumferential surface of the glass pipe: 1.5 mm

The content concentration of the impurity cations contained in the effective portion 11a of the glass pipe 11, on which high purification processing is performed under such conditions, can be made to be equal to or less than 0.010 ppm by weight.

### (Fifth Embodiment)

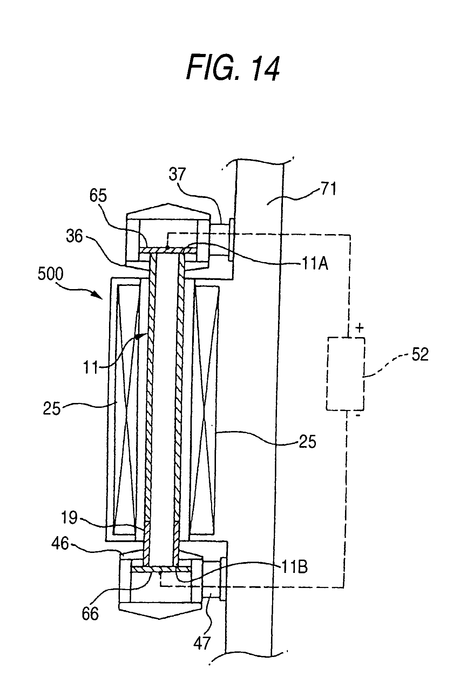

As shown in a schematic longitudinal sectional view of FIG. 14, a sixth high purification apparatus 500 has an elongated base 71, heating means 25 arranged at a specific distance along a longitudinal direction of the base 71 in such a way as to be able to surround a glass pipe 11, and a power supply 52. The base 71 is disposed in a state that the longitudinal direction thereof is an approximately vertical direction. A first chuck 36 enabled to grasp one end portion of the glass pipe 11 is attached to the base 71 through a first support pedestal 37 above the heating means 25. A second chuck 46 enabled to grasp the other end portion of the glass pipe 11 is attached to the base 71 through a second support pedestal 42 below the heating means 25. A second electrode 66 is provided in the second chuck 46 in such a way as to be able to make contact with an end surface of the glass pipe 11.

The first chuck 36 and the second chuck 46 each have a motor (not shown) and rotated in synchronization with each other thereby to enable the glass pipe 11 to rotate around a central axis thereof, which is used as a rotation axis.

The power supply 52 is usually a d. c. power supply. An electrically conductive wire drawn from a positive terminal is connected to a first electrode 65. On the other hand, an electrically conductive wire drawn from the negative terminal of the power supply 52 is connected to a second electrode 66. As the materials of the first electrode 65 and the second electrode 66, graphite and the above-mentioned surface-treated graphite can be cited.

Next, the fifth embodiment of the method of highly purifying a glass pipe according to the invention, which uses the sixth high purification apparatus 500 is described.

First, a glass pipe 11 having an end, to which a dummy pipe 19 is fusion-connected so that the central axes of the pipes are aligned, is prepared.

An end portion of the glass pipe 11, which is provided at the side of the dummy pipe 19, is grasped by the second chuck 46, while the other end portion thereof is grasped by the first chuck 36. Incidentally, a first end surface 11A of the glass pipe (an end surface opposite to the dummy pipe) and a second end surface 11B (an end surface provided at the dummy-pipe side) of the glass pipe make contact with the first electrode 65 and the second electrode 66, respectively. Further, the length in the longitudinal direction of the glass pipe 11 is set at a value, at which nearly the entire region of the glass pipe 11 receives heat from the heating means 25 and can be heated to a temperature of less than 1300 °C.

Subsequently, a voltage application process is performed by activating the heating means 25 to heat the glass pipe 11 at a temperature, which is less than 1300 °C, and activating the power supply 52 to apply a voltage to the glass pipe 11. Usually, the voltage is a d. c. voltage. Preferably, the voltage is set at a value within a range of 1 kV to 50 kV.

In this embodiment, the first electrode 65 serving as an anode and the electrode 66 serving as a cathode are respectively disposed at both ends of the glass pipe 11 in such a way as to face each other. Thus, a voltage, by which the direction of the voltage gradient is almost a direction of the central axis of the glass pipe 11 (a longitudinal direction), is applied to the glass pipe 11.

Further, the voltage gradient is negative in a direction from a first end surface 11A of the glass pipe to a second end surface 11B thereof.

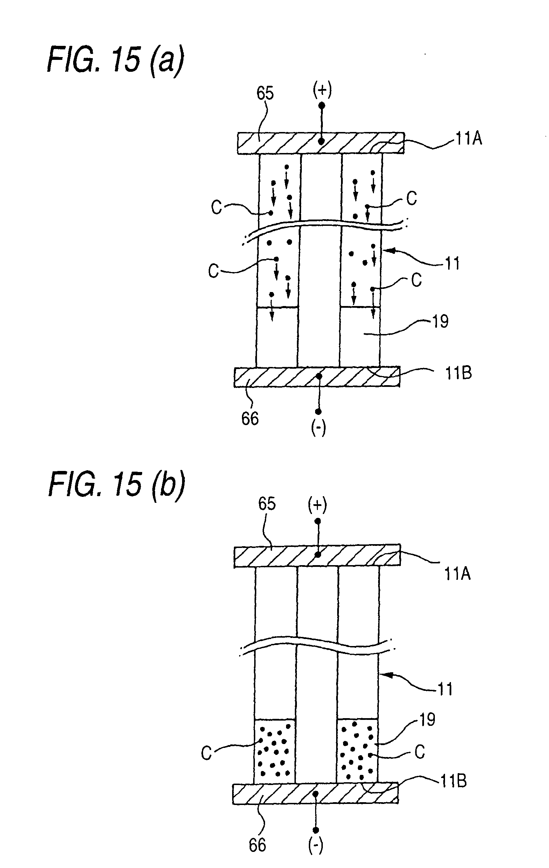

Consequently, impuritycations C (alkali metal ions, such as lithium ions, sodium ions, and potassium ions, and copper ions) contained in the glass pipe move in a direction of the second end surface 11B of the glass pipe, as shown in FIG. 15 (a), which is a sectional view of a primary part of the apparatus shown in FIG. 14.

Then, the voltage application process is continued for a certain time. Thus, the impurity cations C contained in the glass pipe 11 can be unevenly distributed by the dummy pipe 19, as illustrated in FIG. 15(b).

After completion of the voltage application process, an end portion removing process of removing a portion of the glass pipe extending from the second end surface 11B inward to a predetermined depth can be performed when necessary. In the fifth embodiment, the end portion removing process can easily be performed by removing the dummy pipe 19 from the glass pipe 11. Consequently, the high purification of the glass pipe 11 can be more surely performed.

Preferred implementing conditions in the method of highly purifying a glass pipe according to the fifth embodiment are shown below.
Outside diameter of the glass pipe: 40 mm to 75 mm
Inside diameter of the glass pipe: 28 mm to 52.5 mm
Length in a longitudinal direction of the glass pipe (including the dummy pipe): 1000 mm to 1500 mm
Length in a longitudinal direction of the dummy pipe: 50 mm to 100 mm
Voltage application processing time: 20 hours to 30 hours

Similarly to the third embodiment, in the fifth embodiment, the voltage application process is performed while the glass pipe 11 is rotated around the central axis thereof, which is used as a rotation axis, at a rotational speed, which is within a range of 1 rpm to 100 rpm. More preferably, the rotational speed is set to be equal to or more than 1 rpm and equal to or less than 20 rpm.

According to the aforementioned fifth embodiment, advantages similar to those of the third embodiment can be obtained.

### (Sixth Embodiment)

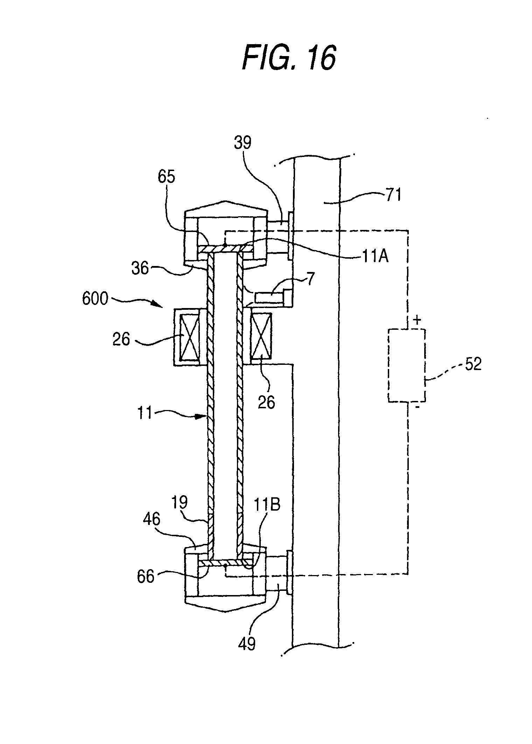

As shown in a schematic longitudinal sectional view of FIG. 16, a seventh high purification apparatus 600 is provided with heating means 26, whose longitudinal length is set to be short, instead of the heating means 25 of the sixth high purification apparatus 500. The high purification apparatus 600 has a first support pedestal 39 and a second support pedestal 49, instead of the first support pedestal 37 and the second support pedestal 47 of the sixth high purification apparatus 500. The first support pedestal 39 and the second support pedestal 49 each have a motor (not shown) and are configured in such a manner as to be able to vertically move at predetermined speeds along the base 71. Incidentally, the heating means may be moved instead of the glass pipe 11.

Next, a method of highly purifying a glass pipe according to the sixth embodiment of the invention, which uses the seventh high purification apparatus 600, is described mainly by citing the differences between the fifth embodiment and the sixth embodiment.

Similarly to the fifth embodiment, an end portion of the glass pipe 11 is grasped by the first chuck 36 and the second chuck 46. The glass pipe 11 has a length in the longitudinal direction thereof, which is sufficiently longer than the length in the longitudinal direction of the heating means 26, such that a partial region of the glass pipe 11 can be heated to a temperature, which is lower than 1300°C, by receiving heat from the heating means 26.

In the sixth embodiment, a voltage application process of heating the glass pipe 11 to a temperature, which is lower than 1300°C, by moving the first support pedestal 39 and the second support pedestal 49 along the base 71 to thereby perform relative movement of the glass pipe 11 with respect to the heating means 26, and simultaneously applying a voltage to the glass pipe 11 can be performed on the entire glass pipe 11.

Similarly to the fifth embodiment, impurity cations contained in the glass pipe 11 move toward the second end surface 11B of the glass pipe. Thus, preferably, first, the first chuck 36 and the heating means are placed to be adjacent with each other. The voltage application process is performed on the top portion of the glass pipe 11. Then, the relative movement of the glass pipe 11 and the heating means 26 is performed. Thus, the voltage application process is performed on a lower region of the glass pipe 11. Consequently, the impurity cations contained in the glass pipe 11 can be unevenly and efficiently distributed in the dummy pipe 19.

Further, in this embodiment, preferably, after the application of the voltage, the glass pipe 11 is cooled down by using the cooling means 7 illustrated in FIG. 6.

Similarly to the third embodiment, in the sixth embodiment, the voltage application process is performed while the glass pipe 11 is rotated around the central axis thereof, which is used as a rotation axis, at a rotational speed, which is within a range of 1 rpm to 100 rpm. More preferably, the rotation speed is set to be equal to or more than 5 rpm and equal to or less than 100 rpm. Further, when necessary, the end portion removing process may be performed after the voltage application process. In the sixth embodiment, the end portion removing process can easily be performed by removing the dummy pipe 19 from the glass pipe 11. Consequently, the high purification of the glass pipe 11 can be more surely performed.

According to the a forementioned second embodiment, advantages similar to those of the first embodiment can be obtained.

Further, in the fifth and sixth embodiments, a columnar glass rod may be used, instead of using the glass pipe 11. In this case, the high purification of the glass rod can be performed by using an apparatus and a method, which are similar to the apparatus and the method used in the case of the high purification of the glass pipe 11. Incidentally, a preferred upper limit value of the heating temperature is 1450 °C.

Incidentally, preferably, in the glass body to be used according to the invention, the length of the effective portion is less than 500 mm in the case of applying a voltage in the longitudinal direction (the direction of the central axis) of the glass body. In the case of moving the impurity cations in the longitudinal direction of the glass body, whose effective portion has a length being equal to or more than 500 mm, the moved distance of the cation is long. Thus, a time required to perform the high purification processing is long. Moreover, the necessity for increasing a voltage to be applied arises. When the applied voltage is too high (for instance, exceeds 50 kV), there is a fear that a discharge may occur before the voltage is applied to the glass body.

In contrast, in the case of applying the voltage in a nearly radial direction of the glass body, the effective portion is permitted to have a length that is equal to or more than 500 nm. Therefore, in the case of high purification of a glass body, whose effective portion has a large length, the application of a voltage in a nearly radial direction of the glass body is more efficient in performing the high purification thereof.

Further, a high-purity glass body, whose out-side diameter is equal to or more than 100 mm, highly purified by such a method is a relatively large glass body. Preferably, the high purification is performed to obtain the content concentration of the impurity cations contained in the effective portion of the glass pipe being equal to or less than 0.010 ppm by weight. Preferably, the content concentration of each of the impurity cations (alkali metal ions, such as lithium ions, sodium ions, and potassium ions, and copper ions) contained in the effective portion of the glass pipe is equal to or less than 10 ppb by weight.

The use of such a high precision and large-sized high purity glass body as an optical fiber base material ingot enables the efficient manufacture of high-quality optical fibers that show favorable transmission characteristics.

Hereinafter, modes, which can be employed as a method of highly purifying a glass pipe, are briefly described.
① A method of highly purifying a glass pipe, which has a voltage application process of applying a voltage to a glass pipe while heating the glass pipe to a temperature, which is within a range of temperature that is equal to or higher than 1000 °C and less than 1300 °C.
② A method of highly purifying a glass pipe according to the item ①, wherein the voltage application process is performed while the glass pipe is rotated around the central axis, which is used as a rotation axis, at a rotational speed that is within a range of 1 rpm to 100 rpm.
③ A method of highly purifying a glass pipe according to the item ① or ②, wherein a direction of a voltage gradient of the voltage is almost a radial direction of the glass pipe.
④ A method of highly purifying a glass pipe according to the item ③, which has a surface evenly-removing process of removing a portion of the glass pipe extending from an outer circumferential surface inward to a predetermined depth subsequently to the voltage application process, wherein the voltage gradient is a negative gradient in a direction from the inner circumferential surface side to the outer circumferential surface side of the glass pipe.
⑤ A method of highly purifying a glass pipe according to the item ③, which has a surface evenly-removing process of removing a portion of the glass pipe extending from an inner circumferential surface inward to a predetermined depth subsequently to the voltage application process, wherein the voltage gradient is a negative gradient in a direction from the outer circumferential surface side to the inner circumferential surface side of the glass pipe.
⑥ A method of highly purifying a glass pipe according to the item ① or ②, in which the direction of the voltage gradient of the voltage is a direction of the central axis of the glass pipe.
⑦ A method of highly purifying a glass pipe according to the item ⑥, which has an end portion removing process of removing a portion of the glass pipe extending from a second end surface inward to a predetermined depth, wherein the voltage gradient is a negative gradient in a direction from a first end surface of the glass pipe to the second end surface of the glass pipe.

### Example 1

High purification of a glass pipe according to the third embodiment is performed under the following conditions by using the high purification apparatus pursuant to the fourth high purification apparatus 300.
Outside diameter of the glass pipe: 150 mm
Inside diameter of the glass pipe: 105 mm
Length in the longitudinal direction of the glass pipe: 1500 mm.

The composition of the glass pipe is SiO₂ containing 0.1 ppm by weight of impurity cations (alkali metal ions, such as lithium ions, sodium ions, and potassium ions, and copper ions).

Incidentally, the concentration of impurity cations is the content of the impurity cations with respect to the entire glass pipe. In the following description, the concentration of impurity cations has the same meaning.

Further, change in the outside diameter in the longitudinal direction of the glass pipe is measured by an ultrasonic measuring apparatus. Then, a standard deviation (hereunder also referred to as a glass pipe diameter standard deviation) is calculated. The standard deviation is 0.1 mm.
Inner gas: argon, -0.5 kPa · gage
Outer gas: argon, 10 l/min., 1 kPa · gage
Heating temperature: 1100 °C
Voltage: a d. c. voltage of 40 kV
Voltage Application process time: 30 hours
Rotational speed of the glass pipe: 30 rpm

Depth of the glass pipe removed in the surface evenly-removing process (chemical etching) from the outer circumferential surface of the glass pipe: 0.24 mm

### Example 2

Method of highly purifying a glass pipe is performed, similarly to Example 1, except that the heating temperature is 1280 °C.

### Comparative Example 1

Method of highly purifying a glass pipe is performed, similarly to Example 1, except that the heating temperature is 1320 °C.

The following table shows resultant glass pipes obtained after completion of performing the high purification methods according to the Examples and the Comparative Example.

**Table 2**

| | Heating Temperature (°C) | Concentration of Impurity Cations (weight·ppm) | Glass Pipe Standard Deviation (mm) |
|---|---|---|---|
| Example 1 | 1100 | 0.02 | 0.1 |
| Example 2 | 1280 | < 0.01 | 0.3 |
| Comparative Example 1 | 1320 | < 0.01 | 0.8 |

As shown in Table 2, according to the high purification method in the case of the Examples in which the heating temperature is set to be less than 1300 °C, the impurity cations are decreased. Moreover, the glass-pipe-diameter standard deviation hardly changes. That is, the high purification is performed while decreasing deformation of the glass pipe at a high degree. The glass pipes purified at a high degree by the high purification methods in the case of the Examples meet the shape accuracy and purity for optical fibers without any other processing.

On the other hand, in the case of Comparative Example 1, the glass-pipe-diameter standard deviation increases. This means that deformation of the glass pipe has occurred. Thus, the glass pipe in the case of Comparative Example 1 does not meet, for example, the shape accuracy for optical fibers without any other processing.

Meanwhile, high purity glass tubes can be manufactured by performing boring (including increasing a diameter) of a glass body while appropriately utilizing the aforementioned methods of highly purifying a glass body.

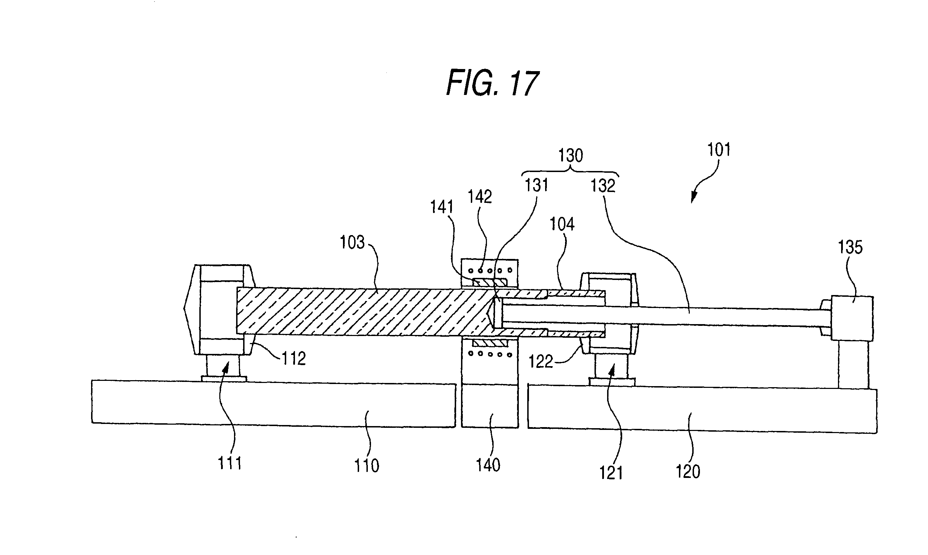

Next, embodiments of a method and an apparatus for manufacturing a glass tube including highly purification according to the invention are described with reference to FIGS. 17 to 24.

### (Seventh Embodiment)

A seventh embodiment herein described is an embodiment adapted to generate a voltage gradient in a radial direction of a gradually formed glass tube by utilizing, when a boring jig is brought in contact with a glass body, a heating element and the boring jig as electrodes, and applying voltages to an inner circumferential side and an outer circumferential side of the glass tube. Incidentally, the radial direction of the glass tube designates a direction perpendicular to the longitudinal direction of the glass tube.

As shown in FIG. 17, an apparatus 101 of manufacturing glass tubes, which is used in this embodiment, manufactures glass tubes by performing what is called a piercing method. The apparatus 101 is provided with a furnace 140 for heating a glass rod 103, an inlet side base 110 disposed at an inlet side of the furnace 140, and an outlet side base 120 disposed at an outlet side of the furnace 140.

A glass dummy pipe 104 is connected to an end of the glass rod 103 to be bored.

A first feed support pedestal 111 enabled to slide-move at a desired speed in a lateral direction, as viewed in this figure, is provided on an inlet side base 110. In this first feed support pedestal 111 a boring termination end side of the glass rod 103 is grasped by the first chuck 112, and the glass rode 103 can be rotated around an axis extending in the longitudinal direction.

Also, a second feed support pedestal 121 enabled to slide-move laterally, as viewed in this figure, similarly as the first feed support pedestal does is provided on an outlet side base 120. The traveling speed of the second feed support pedestal 121 is appropriately controlled in such a way as to be associated with that of the first feed support pedestal 111. In this second feed support pedestal 121, an end of the dummy pipe 104 connected to a boring initiation end side of the glass rod 103 is grasped by a second chuck 122, and the glass rod 103 can be rotated around a longitudinal axis thereof. Further, the rotation thereof can be controlled in such a manner as to be synchronized with the rotation of the first chuck 112 of the first feed support pedestal 111. Furthermore, the rotational speed of the first chuck 112 and the rotational speed of the second chuck 122 may be made to differ from each other. Preferably, the rotational speeds of the first chuck 112 and the second chuck 122 are about 1 rpm to 100 rpm.

A fixing member 135 for fixing the boring jig 130 is provided on the outlet side base 120. The boring jig 130 has a support rod 132 and a plug 131 provided at an end of the support rod 132, which is connected to the fixing member 135. Furthermore, the support rod 132 has a central axis, which is the same as that of the plug 131, and is supported in a state that the central axis thereof coincides with the central axis of the glass rod 103.

The plug 131 is available at the softening temperature of the glass rod 103 and formed of a material that does not chemically react with the glass rod 103. Preferably, the plug 131 is formed of graphite. Graphite excels in stability even at a high temperature, at which glass is softened, and has a high degree of electrical conductivity.

Further, the content of impurities contained in ordinary graphite is about 400 ppm. However, preferably, high purity graphite is used as the material of the plug 131 of this embodiment. More preferably, the content of impurities contained in this graphite is equal to or less than 1 ppm. Thus, when the plug 131 is brought into contact with and pressed into the glass rod 103, the impurities are difficult to move into the glass rod 103 from the plug 131.

Further, preferably, the plug 131 is surface-treated and at least a part of the plug 131, which makes contact with glass, contains one of silicon carbide (SiC), pyrocarbon (PyC), and metallic carbide. Incidentally, the metallic carbide is, for example, niobium carbide (NbC), tantalum carbide (TaC), titanium carbide (TiC), zircon carbide (ZrC) exemplify preferred materials thereof.

A surface treatment is, for example, to form a coating layer, which is made of silicon carbide described above, on the plug 131 thereby enhance strength and abrasion resistance thereof and prevent oxidization thereof in a high temperature condition. Moreover, such surface treatment enables the plug 131 to maintain the high purity of the surface thereof. Furthermore, such surface treatment prevents the diffusion of impurities from the inside of the plug 131 to the glass rod 103.

Further, the furnace 140 of this embodiment is of the high frequency dielectric heating type. The heating element 141 generates heat by feeding a. c. current in a coil 142. The heating element 141 is a cylindrical graphite one covering the surroundings of an abutting portion at which the plug 131 abuts against the glass rod 103. This heating element 141 generates heat at a temperature, which is equal to or higher than the softening temperature of glass, thereby to heat and soften the glass rod 103.

Incidentally, the softening point of the high purity glass body produced by VAD method or the like is about 1700 °C.

Next, the constitute elements for applying a voltage to the inner circumferential side and the outer circumferential side of a glass tube gradually formed are described.

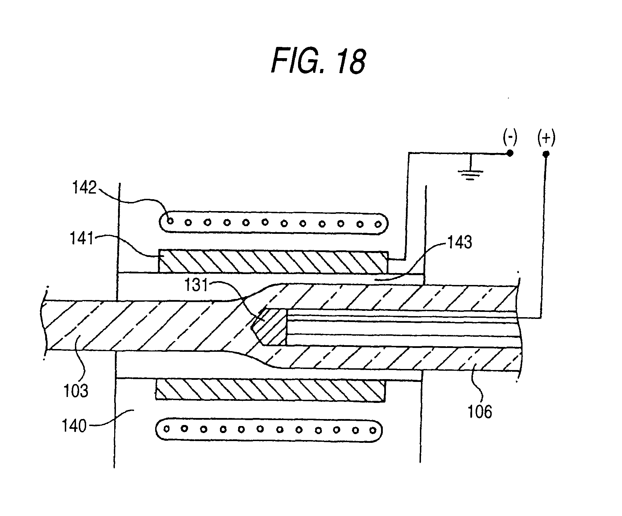

The heating element 141 and the plug 131 are configured in such a way as to serve as electrodes respectively polarized to positive or negative potentials as shown in FIG. 18. That is, a d. c. power supply is connected to the heating element 141 and the plug 131.

With such a configuration, the plug 131 can apply a voltage to the inner circumferential side of the glass tube 106 by making contact with the bored glass tube 106. Further, the heating element 141 can apply a voltage to the outer circumferential side of the glass tube 106. Preferably, a gas supply means (not shown) communicating with the inside of a space 143 is provided thereby to supply gas to the inside of the space 143. The electrical conductivity between the heating element 141 and the glass tube 106, which are in a noncontact state, is enhanced by this gas. Thus, voltages can efficiently be applied to the glass tube 106.

Further, a rare gas, such as argon gas, or nitrogen gas may be used as such gas. Furthermore, preferably, ionized gas is used.

When a glass tube is manufactured in this embodiment, the glass rod 103 fed into the furnace 140 is heated and softened by causing the heating element 141 to generate heat, as illustrated in FIGS. 17 and 18. The plug 131 of the boring jig 130 is brought into contact with and pressed into a softened portion. Thus, the glass rod 103 is gradually bored to thereby gradually form the glass tube 106. Then, when the plug 131 is pressed into the glass rod 103, voltages are applied from the heating element 141 and the plug 131 to the gradually formed glass tube 106. At that time, the heating element 141 and the plug 131 are set in such a way as to respectively serve electrodes whose potentials differ from each other. Consequently, a voltage gradient in a radial direction of the glass tube 106 can be generated.

For example, as illustrated in FIG. 18, the heating element 141 is set to be a cathode, while the plug 131 is set to be an anode. The voltage gradient generated in this case is a negative gradient according to which the potential changes from a positive one to a negative one toward the outer circumferential side from the inner circumferential side of the glass tube 106.

The impurities moved into the glass body 103 from the plug 131 at the manufacture thereof are mainly alkali metal ions, such as lithium ions, sodium ions, and potassium ions, alkaline earth metal ions, such as calcium ions, and cations, such as copper ions. Therefore, the voltage gradient generated in a radial direction of the softened glass tube 106 causes the impurities to move to the outer circumferential portion of the glass tube 106 placed at a cathode side.

Thus, high purification of portions of the glass tube 106, which are other than the outer circumferential portion, can be achieved by moving the impurities, which have been included into the glass tube 106, to the outer circumferential portion thereof.

The lower the viscosity of the softened glass, the more likely it is that the movement of the impurities occurs. According to the invention, high purification is performed nearly simultaneously with boring. Thus, the bored glass tube 106 is heated to a temperature of, for example, about 1800 °C. Thus, the impurities can efficiently be moved, whereby the high purification can effectively be performed.

Further, the impurities localized in the glass tube 106 can appropriately be eliminated by removing an outer circumferential portion of the glass tube 106 to a desired depth through the use of mechanical means, such as grinding, and chemical means, such as etching processing using hydrofluoric acid.

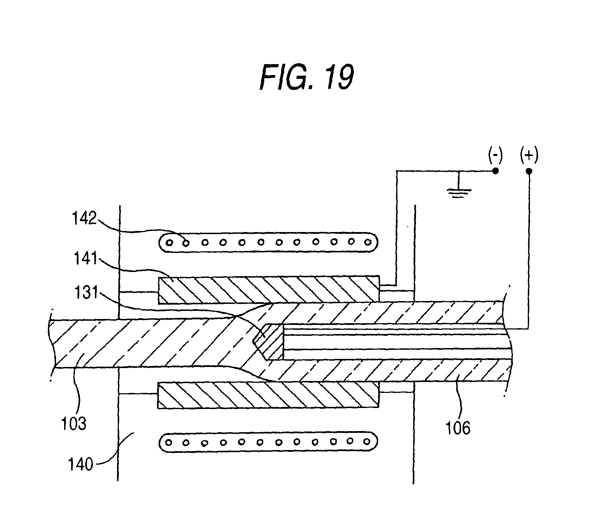

Further, in the mode shown in FIG. 18, a space 143 is provided between the heating element 141 and the glass tube 106, and the heating element 141, which serves as an electrode, and the glass tube 106 is in a noncontact state. However, the heating element 141 and the glass tube 106 may be brought into contact with each other. That is, the inside diameter of the heating element 141 is set to make contact with the outer circumferential surface of the bored glass tube 106 at the inner circumferential surface of the heating element 141, as illustrated in FIG. 19. With such a configuration, a voltage can be applied directly to the glass tube 106, which is being bored and increases in the outside diameter, from both the outer circumferential side and the inner circumferential side without using gas. High purification can effectively be performed. Additionally, there is no need for providing a gas supply means in the apparatus.

Further, in a case where the inside diameter of the heating element 141 is set to be equal to the outside diameter of the glass tube 106, the glass tube 106 can be formed to have the outside diameter of ¥ a desired value.

Further, in this case, the impurities can be prevented by performing surface treatment on the heating element 141 similarly to the plug 131 from being moved into the glass tube 106.

Incidentally, although a mode, in which the impurities are localized at the outer circumferential side of the glass tube, has been described in the description of this embodiment, the impurities may be localized at the inner circumferential side. That is, the heating element 141 is used as an anode, while the plug 131 is used as a cathode. A voltage gradient generated in this case is a negative gradient, according to which the potential changes from a positive one to a negative one, from the outer circumferential side of the glass tube 106 to the inner circumferential side thereof.

In a case where the plug 131 is used as a cathode, the impurities, which are cations, tends to remain in the plug 131. Thus, the impurities can be prevented from being moved into the glass tube 106 from the plug 131. Further, the impurities have been moved into the glass body 103 can be localized in the inner circumferential portion of the glass tube 106 and also can be absorbed into the plug 131.

Thus, even in the case that the impurities are localized in the inner circumferential portion of the glass tube 106, the inner circumferential portion can be removed to a desired depth when needed. Consequently, the impurities can be removed from the glass tube 106.

Further, preferably, restoration of the plug 131 having absorbed the impurities is performed. For example, the restoration of the plug 131 is performed by heating the plug 131 through the use of a furnace, whose heating space is in the atmosphere of chlorine gas, and then diffusing the impurity cations contained in the plug 131 into the chlorine gas.

In the foregoing description, the embodiment utilizing the heating element and the boring jig as the electrodes has been described. However, according to the invention, other members can be used as the electrodes. Such an embodiment is described hereinbelow.

### (Eighth Embodiment)

In the description of this eighth embodiment, an embodiment utilizing an electrode member provided in the boring jig as an electrode is described.

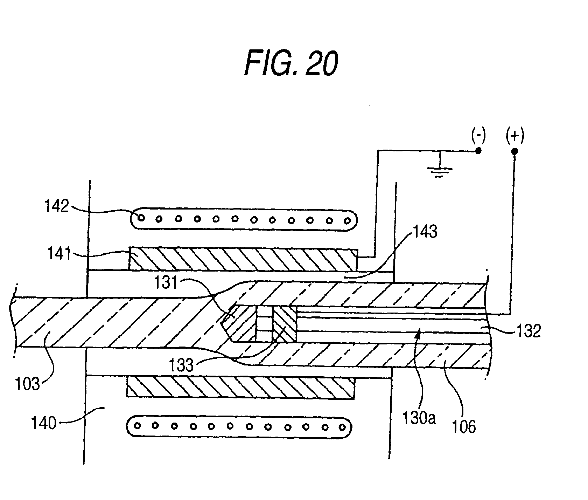

The configuration of an apparatus for manufacturing a glass tube, which is employed by this embodiment, is almost similar to that of the apparatus for manufacturing a glass tube, which is shown in FIG. 17. A primary part of this embodiment is described with reference to FIG. 20.

As shown in FIG. 20, a boring jig 130a used in this embodiment is provided with an electrode member 133 serving as an electrode in the rear and vicinity (at the right side, as viewed in this figure) of a plug 131. This electrode member 133 is shaped like a cylinder and fixed to a support rod 132. The outside diameter thereof is nearly equal to that of the plug 131. The material thereof is similar to that of the plug 131. Preferably, a surface treatment, which is similar to that performed on the plug 131, is performed on this electrode member.

In this embodiment, a d. c. power supply is connected to this electrode member 133, instead of connecting the d. c. power supply to the plug 131. Thus, the electrode member 133 can apply a voltage to the inner circumferential side of the glass tube 106 by making contact with a bored glass tube 106.

The electrode member 133 of such a configuration has the function of an electrode and acts in such a manner as to maintain the inside diameter of the softened glass tube 106. Further, in a case where a coating layer made of silicon carbide or the like is formed on a surface of the electrode member 133, impurities is not moved into the glass rod 106.

When the plug 131 is pressed into the glass rod 103, voltages are applied from the heating element 141 and the electrode member 133 to the gradually formed glass tube 106. At that time, the heating element 141 and the electrode member 133 are set in such a way as to serve as electrodes that differ in potential from each other. Consequently, a voltage gradient can be generated in a radial direction of the glass tube 106.

In a case where the heating element 141 is a cathode and the electrode member 133 is an anode, as illustrated in FIG. 20, a negative voltage gradient, according to which the potential changes from a positive value to a negative value in a direction from the inner circumferential side of the glass tube 106 to the outer circumferential side thereof, is generated. In this case, impurities are localized in an outer circumferential portion of the glass tube 106.

Further, conversely to the case illustrated in FIG. 20, the heating element 141 and the electrode member 133 can be set to be an anode and a cathode, respectively. In this case, impurities are localized in an inner circumferential portion of the glass tube 106.

Incidentally, when the electrode member 133 is used as a cathode, the voltage may also be applied to the plug 131 and then the plug 131 may serve as a cathode. In this case, impurities are absorbed by the plug 131. Thus, preferably, the plug 131 is constituted by a nonconductive material. Alternatively, preferably, a part of a support rod 132 located between the electrode member 133 and the plug 131 is constituted by a nonconductive material. Boron nitride, zirconia, ceramics and so on can be used as the nonconductive material.

Consequently, since impurities can be absorbed only by the electrode member 133, the plug 131 is not contaminated by impurities. Preferably, the contaminated electrode member 133 is detached from the support rod 132 and replaced with a new member, alternatively, restored. This facilitates the maintenance of the apparatus.

Additionally, this embodiment may be configured by setting the outside diameter of the electrode member 133 to be smaller than that of the plug 131 thereby to detach the electrode member 133 from the inner circumferential surface of the glass tube 106. In this case, preferably, the aforementioned gas is supplied to the inside of the glass tube 106.

Further, similarly to the seventh embodiment, the heating element 141 is brought into contact with the glass tube 106 in the eighth embodiment, as illustrated in FIG. 19.

### (Ninth Embodiment)

In the description of this ninth embodiment, an embodiment utilizing a muffle tube provided in a furnace as an electrode is described.

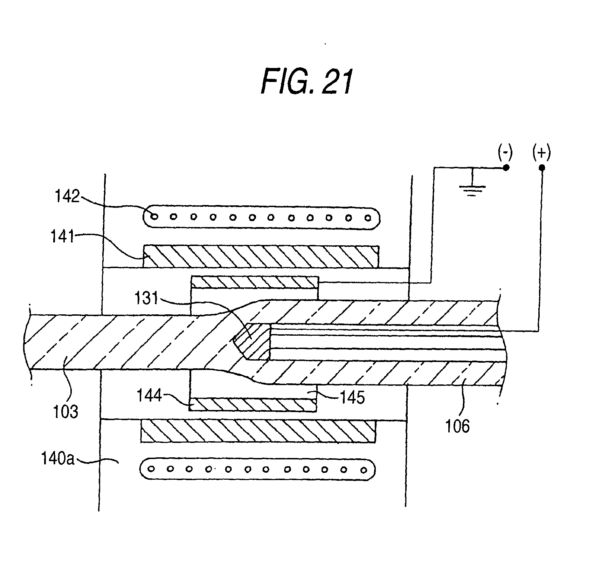

As illustrated in FIG. 21, a furnace 140a used in this embodiment has a cylindrical muffle tube 144 provided in a space at the inner circumferential side of the heating element 141. A space 145 is provided between this muffle tube 144 and the glass tube 106 to be formed. Further, carbon or the like may be used as the material of the muffle tube 144.

In this embodiment, a d. c. power supply is connected to this muffle tube 144, instead of connecting a d. c. power supply to the heating element 141. Thus, the muffle tube 144 can apply a voltage to the outer circumferential side of the glass tube 106. Further, preferably, gas is supplied to the inside of the space 145 when the voltage is applied to the glass tube 106.

With such a configuration, the muffle tube 144 and the plug 131 are utilized as electrodes, and a voltage gradient can be generated in a radial direction of the glass tube 106.

Therefore, similarly to the case of the seventh embodiment, the glass tube 106 to be formed can be highly purified. Further, when the muffle tube 144 is contaminated, the muffle tube 144 is replaced or restored, and thereby the maintenance of the apparatus is easy to perform.

### (Tenth Embodiment)

In the description of this tenth embodiment, an embodiment utilizing a die provided in a furnace as an electrode is described.

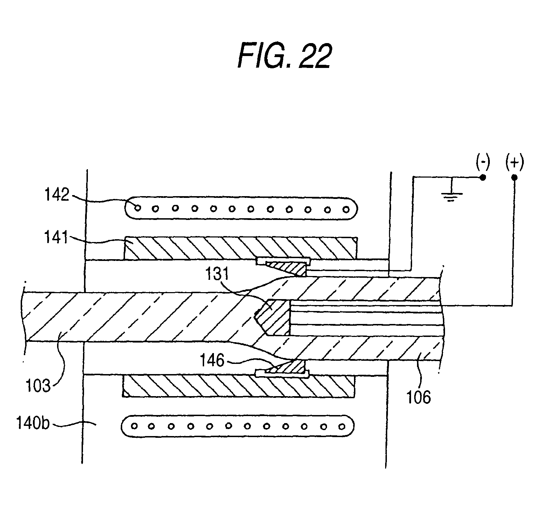

As illustrated in FIG. 22, a furnace 140b used in this embodiment has a die 146 provided on the inner circumferential surface of the heating element 141. This die 146 is made of graphite constituted in such a way as to prevent impurities from being moved into a glass tube 106, similarly to the aforementioned plug 131. In this embodiment, a d. c. power supply is directly connected to the die 146, instead of the heating element 141. Thus, the die 146 and the plug 131 are utilized as electrodes, and a voltage gradient can be generated in a radial direction of the glass tube 106.

At that time, the die 146 and the plug 131 are brought into contact with the glass tube 106, and thus voltages can efficiently act on the glass tube 106, without using gas, differently from the aforementioned embodiment using gas. Additionally, there is no need for providing gas supply means in the apparatus.

Further, the provision of the die 146 enables that the glass tube 106 can be formed in such a way as to have a desired outside diameter while the glass rod 103 is bored by the plug 131.

Therefore, the glass tube 106 can be formed with high accuracy, and also can efficiently be highly purified.

### (Eleventh Embodiment)

In the description of this eleventh embodiment, an embodiment, in which voltages are applied to a glass tube from at least one pair of electrodes provided on the outer circumferential surface of the glass tube, is described.

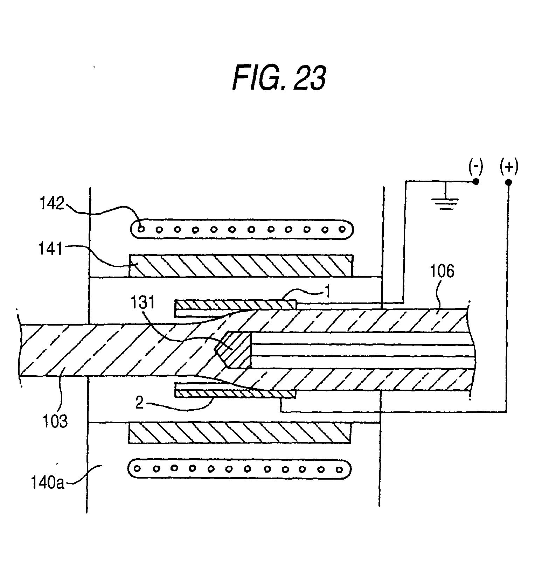

As shown in FIG. 23, an apparatus for manufacturing a glass tube to be used in this embodiment has a pair of electrodes 1 and 2, which are provided in a furnace 140a and disposed in such a way as to face each other and as to sandwich the outer circumferential surface of the glass tube 106. These electrodes 1 and 2 are formed of the same material as that of the electrodes 1 and 2 described in the foregoing description of the high purification method. The surface of each of the electrodes, which makes contact with the glass tube 106, has a shape curved at a curvature, which is nearly equal to that of the outer circumferential surface of the glass tube 106. In this embodiment, the electrodes are used in a manner similar to the manner, in which the electrodes are used in, for example, the first embodiment or the second embodiment described by referring to FIGS. 2 to 5. That is, high purification of a glass tube can be performed by unevenly distributing impurities, which are contained in the glass tube, in a part of the outer circumferential surface thereof, while glass tubes are manufactured.

### (Twelfth Embodiment)

In the description of this twelfth embodiment, an embodiment, in which voltages are applied to a glass body from electrodes disposed by making contact with a first end surface and a second end surface in the longitudinal direction of the glass body, is described.

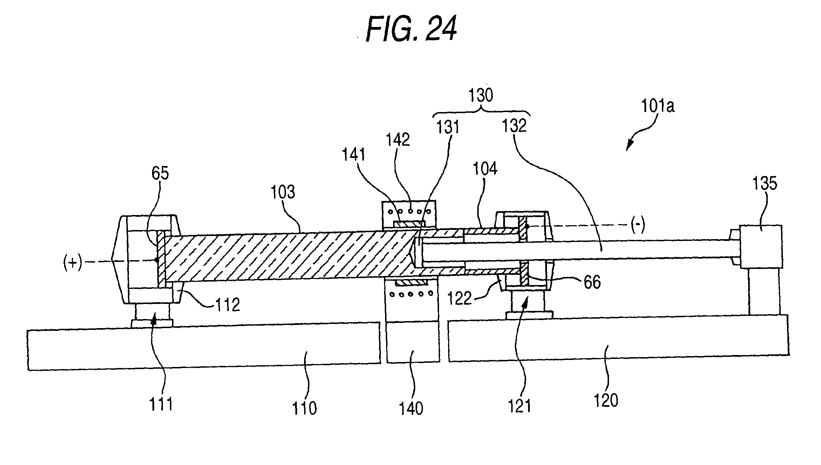

As illustrated in FIG. 24, an apparatus 101a of manufacturing a glass tube, which is used in this embodiment, electrodes 65 and 66 are provided on the exteriors of both end surfaces in the longitudinal direction of the glass body consisting of a glass rod 103 and a dummy pipe 104, similarly to the sixth high purification apparatus 500 (see FIG. 14) described in the description of the fifth embodiment. The configuration of each of these electrodes 65 and 66 is almost similar to that in the case of the fifth embodiment. Also, the method of using these electrodes is similar to that in the case of the fifth embodiment. That is, when boring is performed by a boring jig 130, a voltage is applied in the longitudinal direction of the glass tube 106, a voltage gradient in the longitudinal direction thereof is generated. Consequently, impurities are unevenly distributed in a cathode side portion, and high purification of a glass tube can be performed while the glass tube is manufactured.

Further, in all the aforementioned embodiments, it does not matter whether or not the electrodes make contact with the glass body (or the glass tube). In the case that the electrodes make contact therewith, there is no necessity for using gas. Preferably, at least an edge or peripheral portion of a portion, with which the cathode makes contact, is removed. In the case that the electrodes do not make contact therewith, at least an edge or peripheral portion at the side, at which the cathode is placed, that is, at the side at which the voltage gradient is low, is removed. Further, in the aforementioned seventh to twelfth embodiments, the high purification method and apparatus can appropriately use the configurations of the methods and apparatuses described in the description of the aforementioned first to sixth embodiments.

Incidentally, although the modes, in each of which boring is performed on the glass rod that is a columnar glass body, have been described in the description of the seventh to twelfth embodiments, the method of manufacturing a glass tube according to the invention can be employed even in a case of increasing the inside diameter of a glass pipe, which is a cylindrical glass body.

Further, although the induction heating furnace is cited as an example of a furnace, a resistance heating furnace may be used.

Although the invention has been described in detail with reference to specific embodiments, it is obvious to those skilled in the art that various changes and modifications can be made without departing from the spirit and scope thereof.

This application is based on Japanese Patent Application No. 2002-235274, filed on August 12, 2002, Japanese Patent Application No. 2002-234563, filed on Aug. 12, 2002, and Japanese Patent Application No. 2003-166430, filedon Jun. 11, 2003, the content of which is incorporated herein by reference.

### Industrial Applicability

As is apparent form the foregoing description of the embodiment, according to the invention, there can be provided a method of highly purifying a glass body, which enables high purification thereof while decreasing deformation of the glass body at a high degree, a highly purified glass body, and a method and an apparatus for manufacturing a glass tube, which can obtain a highly purified glass tube.

## Claims

1. A method of highly purifying a glass body, the method comprising:
applying voltages, in a nearly radial direction of said glass body, to at least a part in a longitudinal direction of a columnar or cylindrical glass body from at least one pair of electrodes placed on an exterior of an outer circumferential surface of the glass body.

2. The method of highly purifying a glass body according to claim 1, wherein said electrodes are plural anodes and plural cathodes arranged in a circumferential direction of said glass body, and wherein a potential of each of said anodes and a potential of each of said cathodes are respectively set.

3. The method of highly purifying a glass body according to claim 1 or 2, wherein a relative swinging motion between said glass body and each of said electrodes occurs in a circumferential direction of said glass body.

4. The method of highly purifying a glass body according to one of claims 1 to 3, further comprising:
a surface removing process of removing a portion of the glass body extending from the outer circumferential surface inward to a predetermined depth after the voltages are applied to the glass body.

5. A method of highly purifying a glass body, the method comprising:
when a cylindrical glass body is rotated around a central axis thereof used as a rotation axis at a rotational speed, which is equal to or more than 1 rpm and equal to or less than 100 rpm, applying voltages, in a nearly radial direction of said glass body, to at least a part in a longitudinal direction of said glass body from electrodes disposed at an outer circumferential surface side and an inner circumferential surface side of said glass body.

6. The method of highly purifying a glass body according to claim 5, wherein the voltages are applied while said cylindrical glass body is rotated around the central axis to be used as a rotation axis at a rotational speed, which is equal to or more than 1 rpm and equal to or less than 20 rpm.

7. The method of highly purifying a glass body according to claim 5 or 6, further comprising:
a surface removing process of removing a portion of the glass body extending from an outer circumferential surface inward to a predetermined depth after the voltages are applied to the glass body, wherein a voltage gradient of the voltage is set to be a negative gradient in a direction from the inner circumferential side of said glass body to the outer circumferential side thereof.

8. The method of highly purifying a glass body according to claim 5 or 6, further comprising:
a surface removing process of removing a portion of the glass body extending from an inner circumferential surface outward to a predetermined depth after the voltages are applied to the glass body, wherein a voltage gradient of the voltage is set to be a negative gradient in a direction from the outer circumferential side of said glass body to the inner circumferential side thereof.

9. The method of highly purifying a glass body according to one of claims 1 to 8, wherein the voltages are simultaneously applied to an entirety in a longitudinal direction of an effective portion of said glass body.

10. The method of highly purifying a glass body according to one of claims 1 to 8, wherein the voltages are serially applied to said glass body in a longitudinal direction of the glass body.

11. The method of highly purifying a glass body according to claim 10, wherein while the voltages are serially applied to said glass body in a longitudinal direction of the glass body, portions, to which the voltages have been applied, are sequentially cooled.

12. The method of highly purifying a glass body according to one of claims 1 to 11, wherein a length in the longitudinal direction of said effective portion of said glass body is equal to or more than 500 mm.

13. A method of highly purifying a glass body, the method comprising:
applying voltages in a longitudinal direction of a columnar or cylindrical glass body from electrodes placed on exteriors of a first end surface and a second end surface in a longitudinal direction of said glass body.

14. The method of highly purifying a glass body according to claim 13, further comprising:
an end portion removing process of removing a portion of the glass body extending from the second end surface of said glass body to the first end surface to a predetermined depth wherein a voltage gradient of the voltage is set to be a negative gradient in a direction from the first end surface to the second end surface of said glass body.

15. The method of highly purifying a glass body according to claim 13 or 14, wherein a length in a longitudinal direction of an effective portion of said glass body is less than 500 mm.

16. The method of highly purifying a glass body according to one of claims 1 to 15, wherein the voltages are applied without bringing said electrodes in contact with said glass body.

17. The method of highly purifying a glass body according to one of claims 1 to 15, wherein the voltages are applied in a state in which at least a part of said electrodes is brought into contact with said glass body.

18. The method of highly purifying a glass body according to one of claims 1 to 4 and claims 13 to 15, wherein the voltages are applied while heating a portion of said columnar glass body, to which the voltages are applied, to a temperature that is less than 1450 °C.

19. The method of highly purifying a glass body according to one of claims 1 to 17, wherein the voltages are applied while heating a portion of said glass body, to which the voltages are applied, to a temperature that is less than 1300 °C.

20. The method of highly purifying a glass body according to claim 18 or 19, wherein the voltages are applied while heating a portion of said glass body, to which the voltages are applied, to a temperature that is equal to or higher than 450 °C.

21. The method of highly purifying a glass body according to claim 18 or 19, wherein the voltages are applied while heating a portion of said glass body, to which the voltages are applied, to a temperature that is equal to or higher than 600 °C.

22. The method of highly purifying a glass body according to claim 18 or 19, wherein the voltages are applied while heating a portion of said glass body, to which the voltages are applied, to a temperature that is equal to or higher than 900 °C.

23. The method of highly purifying a glass body according to one of claims 1 to 22, wherein a content concentration of impurity cations contained in an effective portion of said glass body is decreased to equal to or less than 0.01 ppm by weight.

24. A high purity glass body highly purified by the method of highly purifying a glass body according to one of claims 1 to 12, wherein an outside diameter of the glass body is equal to or more than 100 mm, and wherein a length of an effective portion is equal to or more than 500 mm.

25. A high purity glass body highly purified by the method of highly purifying a glass body according to one of claims 13 to 15, wherein an outside diameter of the glass body is equal to or more than 100 mm, and wherein a length of an effective portion is less than 500 mm.

26. The high purity glass body according to claim 24 or 25, wherein a content concentration of impurity cations contained in an effective portion of said glass body is equal to or less than 0.01 ppm by weight.

27. A method of manufacturing a glass tube by heating a columnar or cylindrical glass body to thereby soften said glass body, and then bringing a boring jig in contact with the softened portion of said glass body to thereby gradually form said glass body into a glass tube, the method comprising:
when said boring jig is brought into contact with said glass body, applying voltages, in a nearly radial direction of said glass body, to said glass tube from at least one pair of electrodes provided on an exterior of an outer circumferential surface of said glass body to thereby generate a voltage gradient.

28. A method of manufacturing a glass tube by heating a columnar or cylindrical glass body to thereby soften said glass body, and then bringing a boring jig in contact with the softened portion of said glass body to thereby gradually form said glass body into a glass tube, the method comprising:
when said boring jig is brought into contact with said glass body, applying voltages between said boring jig and an outer circumferential side of said glass body or between an inner circumferential side and an outer circumferential side of said glass tube to thereby generate a voltage gradient in a nearly radial direction of said glass body or said glass tube.

29. A method of manufacturing a glass tube by heating a columnar or cylindrical glass body to thereby soften said glass body, and then bringing a boring jig in contact with the softened portion of said glass body to thereby gradually form said glass body into a glass tube, the method comprising:
when said boring jig is brought into contact with said glass body, applying voltages, in a longitudinal direction of said glass tube, to said glass body from electrodes provided on exteriors of a first end surface and a second end surface in a longitudinal direction of said glass body to thereby generate a voltage gradient.

30. The method of manufacturing a glass tube according to one claims 27 to 29, further comprising:
after said glass tube is formed, removing at least an edge or peripheral portion of said glass tube at which the voltage gradient is set to be low.

31. An apparatus for manufacturing a glass tube, said apparatus having a heating element disposed around a columnar or a cylindrical glass member, and also having a boring jig to be brought in contact with said glass body heated by said heating element, said apparatus forming said glass body gradually into a glass tube by contacting the boring jig to the glass body, said apparatus further comprising:
at least one pair of electrodes provided on an exterior of an outer circumferential surface of said glass body.

32. An apparatus for manufacturing a glass tube, said apparatus having a heating element disposed around a columnar or a cylindrical glass member, and also having a boring jig to be brought in contact with said glass body heated by said heating element, said apparatus forming said glass body gradually into a glass tube by contacting the boring jig to the glass body,
wherein said boring jig is an electrode, and another electrode is provided on an outer circumferential side of said glass body, or wherein electrodes are provided on an inner circumferential side and the outer circumferential side of said glass tube.

33. An apparatus for manufacturing a glass tube, said apparatus having a heating element disposed around a columnar or a cylindrical glass member, and also having a boring jig to be brought in contact with said glass body heated by said heating element, said apparatus forming said glass body gradually into a glass tube by contacting the boring jig to the glass body, said apparatus further comprising:
at least one pair of electrodes provided on exteriors of both end surfaces in a longitudinal direction of said glass body.

34. The apparatus for manufacturing a glass tube according to one of claims 31 to 33, wherein said boring jig is surface-treated and at least a part of the boring jig, which makes contact with said glass body, contains one of silicon carbide, pyrocarbon, and metallic carbide.
